# EUROPEAN PATENT SPECIFICATION

(11) **EP 1 668 226 B1**
(45) Date of publication and mention of the grant of the patent: **02.01.2008**
(21) Application number: 04764554.4
(22) Date of filing: 27.08.2004
(51) Int. Cl.: F01K 23/06, F02G 5/02, F01K 23/10, F02C 6/18

(54) **ENERGY RECOVERY SYSTEM**
ENERGIERÜCKGEWINNUNGSSYSTEM
SYSTEME DE RECUPERATION D'ENERGIE

(30) Priority: 27.08.2003 GB 0320021; 27.08.2003 GB 0320022; 27.08.2003 GB 0320023; 27.08.2003 GB 0320024; 27.08.2003 GB 0320025; 27.08.2003 GB 0320026
(43) Date of publication of application: 14.06.2006
(73) Proprietor: TTL Dynamics LTD, Salisbury, Wiltshire SP2 0SE (GB); Freepower Ltd., Salisbury, Wiltshire SP2 0EG (GB)
(72) Inventor: BIDDLE, Richard, James, Salisbury Wiltshire SP8 5JL (GB); SIMCOCK, Miriam, Wiltshire SP2 0EG (GB); MAGUIRE, Jonathan, Shaftesbury Dorset SP7 0QW (GB)
(74) Representative: Jenkins, Peter David
(86) International application number: PCT/EP2004/009580
(87) International publication number: WO 2005/021936

(56) References cited:
- EP-A- 0 098 481
- EP-A- 1 016 775
- EP-A- 1 249 580
- WO-A-98/25019
- US-A- 3 234 735
- US-A- 4 468 923
- US-A1- 2002 047 267

## Description

The present invention relates to energy usage in diverse forms of industry, and more particularly relates to an energy recovery system.

There are many conventional techniques for generating (electrical) energy; most typically involve combustion of some fuel (e.g. coal, natural gas) that, ultimately, is in limited supply.

In addition, numerous energy conversion techniques have been described. For example, US-A-4,896, 509 discloses a process for converting thermal energy into mechanical energy in a Rankine cycle. Here, a cycle is repeated comprising the steps of vaporising a working fluid with a hot heat source (such as hot water from a boiler typically used to produce water-steam), expanding the resultant vapour in an expansion device (rotating or reciprocal displacement device, e.g. a turbine), cooling it with a cold heat source (such as cold water) to condense it (e.g. using condensers typically employed in the refrigerating apparatus), and compressing it using a pump. Such systems, however, typically employ combustion in the boiling.

Furthermore, a problem with available Rankine cycle systems are typically large scale plant operating in the multi megawatt range, and are not suited to extraction of energy on a smaller scale, from relatively low temperature sources, such as hot waste fluid from small industrial installations, automotive combustion engines, and the like.

US-A-2002/047267 discloses producing power from a heat source using an intermediate fluid.

US-A-3,234,735 discloses a power plant including a steam turbine.

There is a need for an energy recovery system that overcomes the aforementioned problems and provides an improved recovery system.

The present invention provides an energy recovery system, for extracting energy from a source of waste heat, the system being a closed system with a circulating working fluid, comprising: a first heat exchanger for receiving source fluid, incorporating the waste heat, at a first temperature and outputting said waste fluid at a second temperature, and for receiving said working fluid at a third temperature and outputting the working fluid at a fourth temperature, said fourth temperature being higher than said third temperature and higher than the boiling point of the working fluid: a turbine unit, arranged to receive the working fluid output from the first heat exchanger at a first pressure and to output the working fluid at a second pressure, said second pressure being lower than the first pressure, the turbine unit thereby imparting rotational energy to a turbine shaft mounted on a bearing within the turbine unit; an electromechanical conversion unit, coupled to the turbine shaft, for converting said rotational energy into electrical energy; and a cooling system, coupled to the turbine unit and to the first heat exchanger, for receiving the working fluid from the turbine unit at a fifth temperature, cooling the fluid, and supplying the fluid to the first heat exchanger at said third temperature, wherein the cooling system includes: a second heat exchanger, coupled to the turbine unit and to the first heat exchanger, for receiving a first supply of working fluid from the turbine unit at said fifth temperature and outputting working fluid from said first supply at a sixth temperature, said sixth temperature being lower than said fifth temperature, the second heat exchanger being adapted to receive a second supply of working fluid in liquid form at a seventh temperature and output working fluid from the second supply of fluid to said first heat exchanger at said third temperature; a condensing unit, coupled to the second heat exchanger and adapted to receive a supply of cooling fluid, for receiving the working fluid output by the second heat exchanger) at said sixth temperature and outputting working fluid in liquid form at said seventh temperature, said seventh temperature being lower than said sixth temperature and lower than the boiling point of the working fluid; and a pump, coupled to the condensing unit, for receiving the liquid working fluid at said seventh temperature and pumping said liquid working fluid to said second heat exchanger, thereby providing said second supply of working fluid to the second heat exchanger; and wherein a fluid pipe is connected between an outlet for the pump, which provides said second supply of working fluid, and said bearing thereby providing lubrication of said bearing by a portion of the liquid working fluid separate from said second supply.

In one embodiment, the first temperature is 110 to 225°C. In one embodiment, the second temperature is 80 to 140°C. In one embodiment, the first temperature is about 180°C and said second temperature is about 123°C. In one embodiment, the first pressure is 10 x 10⁵ to 30 x 10⁵ N/m² (10 to 30 bar) absolute. In one embodiment, the second pressure is 0.5 x 10⁵ to 2 x 10⁵ N/m² (0.5 to 2 bar) absolute.

Preferably, the working fluid comprises a single component fluid selected from the alkanes. Preferably, the working fluid comprises a fluid with a boiling point of from 30-110°C.

Preferably, the electromechanical conversion unit includes an alternator adapted to output electric current. Preferably, the electromechanical conversion unit includes an electrical or electronic conditioning unit, coupled to said alternator, for altering the frequency of the current received from the alternator and outputting current at mains frequency. Preferably, the alternator is a high speed alternator.

In preferred embodiments, the turbine unit has at least one turbine stage mounted on the turbine shaft, the or each turbine stage incorporating a set of vanes. The at least one turbine stage may be made of aluminium or steel. In certain embodiments, the at least one turbine stage is made of plastics material. The plastics material may be (a) polyetheretherketone (PEEK) containing carbon fibre, for example PEEK with 40% carbon fibre, (b) Ultern 2400, or (c) Valox 865.

In accordance with another aspect of the invention there is provided the use of HFE-7100 or hexane or water as the working fluid in the systems of the invention.

In accordance with another aspect of the invention there is provided the use of one of the alkanes as the working fluid in the systems of the invention.

In accordance with another aspect of the invention there is provided an electrical energy generation system, comprising: a microturbine system, the microturbine system comprising a combustion unit, coupled to a source of fuel, for combusting said fuel and outputting a first exhaust fluid, a second turbine unit, coupled for receiving said first exhaust fluid whereby rotational energy is imparted, in use, to a second turbine shaft of the second turbine unit, the second turbine unit being adapted to a output second exhaust fluid; an intermediate heat transfer unit, coupled for receiving said second exhaust fluid and adapted for performing a transfer of heat from the second exhaust fluid to an intermediate heat transfer fluid and to output the intermediate heat transfer fluid after said transfer of heat; and an energy recovery system according to the invention, the energy conversion system having said first heat exchanger coupled for receiving said intermediate heat transfer fluid, the intermediate heat transfer fluid embodying said source fluid.

In accordance with another aspect of the invention there is provided an electrical energy generation system, comprising; an internal combustion system, the internal combustion system comprising an internal combustion engine, coupled to a source of fuel, for combusting said fuel and outputting an engine exhaust fluid, the internal combustion engine being arranged whereby rotational energy is imparted, in use, to an drive shaft; an intermediate heat transfer unit, coupled for receiving said engine exhaust fluid and adapted for performing a transfer of heat from the engine exhaust fluid to an intermediate heat transfer fluid and to output the intermediate heat transfer fluid after said transfer of heat; and an energy recovery system according to the invention, the energy conversion system having said first heat exchanger coupled for receiving said intermediate heat transfer fluid, the intermediate heat transfer fluid embodying said source fluid.

In accordance with another aspect of the invention there is provided an electrical energy generation system, comprising: a waste gas disposal stack, the waste gas disposal stack including a base stage, the base stage including a blower for blowing oxygen-containing gas into the waste gas disposal stack, a combustion stage, adjacent the base stage, coupled to a source of waste gas, the waste gas being or including a combustible gas, the combustion stage being adapted to combust, in use, said waste gas in said oxygen-containing gas, a mixer stage, adjacent said combustion stage, adapted to generate a mixture of gases comprising air mixed with the combustor exhaust gases resulting from said combustion stage; an intermediate heat transfer unit, coupled for receiving said mixture of gases and adapted for performing a transfer of heat from the mixture of gases to an intermediate heat transfer fluid and to output the intermediate heat transfer fluid after said transfer of heat; and an energy recovery system according to the invention, the energy conversion system having said first heat exchanger coupled for receiving said intermediate heat transfer fluid, the intermediate heat transfer fluid embodying said source fluid.

An advantage of the present invention is that it provides an energy recovery system that is compact in scale. Another advantage is that it is capable of extracting energy from relatively low temperature sources. A further advantage is that it can recover energy at a reasonable efficiency from sources of heat that would otherwise be wasted, or from renewable sources, and/or it significantly enhances the amount of electrical energy generated in an energy generating system.

### Turbine design

A further problem is that, while single stage radial flow turbines are known, and two-stage axial flow turbines are known, heretofore there has been a lack of a two-stage radial flow turbine design capable of operating at the high-speed and extremely high pressure differentials encountered in some industries. Often, a problem is that it is not possible for a single stage radial turbine to cope with certain pressure drops.

Thus, there is preferably provided a radial inflow turbine unit, comprising: a housing with an inlet port for receiving fluid at a first pressure; a shaft mounted on a bearing within the housing and having an axis of rotation; a turbine, disposed on the shaft, the turbine comprising a first turbine stage, comprising a first series of vanes mounted on the shaft, said fluid received by the inlet port being radially incident on said first series of vanes and exiting the first turbine stage at a third pressure and in a first predetermined direction, a second turbine stage, comprising a second series of vanes mounted on the shaft, a conduit for conveying the fluid exiting the first turbine stage to the second turbine stage, said fluid received by the second turbine stage being radially incident on said second series of vanes and exiting the second turbine stage at a second pressure and in a second predetermined direction, wherein said fluid imparts rotational energy to said shaft at both said first and second turbine stages.

Preferably, the first pressure is about 2 to 10 times the second pressure. Preferably, the third pressure is about 3-4 times the second pressure.

Preferably, the radial dimension of said second turbine stage is greater than the radial dimension of the first turbine stage. Preferably, the radial dimension of first turbine stage is about 1.25 times the radial dimension of the first turbine stage. Preferably, the axial dimension of said first turbine stage is about 0.3 to 0.375 times the radial dimension of the first turbine stage. Preferably, in the axial dimension of said second turbine stage is about 0.35 to 0.4 times the radial dimension of the second turbine stage.

In a particular embodiment, the turbine unit further includes: a third turbine stage, comprising a third series of vanes mounted on the shaft, a conduit for conveying the fluid exiting the second turbine stage to the third turbine stage, said fluid received by the third turbine stage being radially incident on said third series of vanes and exiting the third turbine stage at a fourth pressure and in a third predetermined direction, wherein said fluid imparts rotational energy to said shaft at said first, second and third turbine stages.

Preferably, the axial dimension of said third turbine stage is about 1/3 times the radial dimension of the third turbine stage.

Preferably, said first, second and/or third predetermined directions is generally axial.

In one embodiment, said fluid is a gas. Preferably, said fluid is HFE-7100 or hexane. The fluid may be one of the alkanes.

An advantage of the turbine design is that it is usable at high rotational speeds (e.g. 25,000 to what 50,000 rpm). An additional advantage is that the two-stage design entails a pressure drop occurring at each stage, allowing it to cope with higher input pressures (e.g. up to 20 bar absolute).

A further advantage is that a relatively compact design of the turbine is permitted.

The foregoing attributes ensure that the turbine may advantageously be employed in systems (e.g. Rankine cycle systems) where energy conversion occurs from fluids (gases) at very high operating pressures, with improved efficiency.

### Bearing design

A further problem arises in the lack of availability of bearing systems for compact scale rotating machinery. There is a need for such devices for supporting the shaft of a rotating component that is rotating at high speed. Moreover, a problem is that of providing a bearing system that operates as both a journal bearing and a thrust bearing in small-scale machinery. Bearings of this type must also be robust and reliable, so that they can be employed in systems operating 24 hours a day, seven days a week for extended periods (and have a life expectancy of the order of five years or more).

The present invention provides a bearing for supporting a shaft rotatable about an axis and at least partially disposed within a housing, comprising: a bearing member, fixedly attached to the housing and having a first bearing surface, opposite a second bearing surface on the shaft, said first and second bearing surfaces extending generally transverse to the axis, and a cylindrical internal channel defining a third bearing surface extending generally parallel to the axis and disposed opposite a fourth bearing surface on the shaft, the bearing member including conduits adapted to convey lubricating fluid into at least the space third and fourth bearing surfaces.

Preferably, the bearing member has, on the end thereof opposite the first bearing surface, a fifth bearing surface extending generally transverse to the axis.

Preferably, the bearing member has a generally T-shaped cross-section Preferably, the first surface on the bearing element is defined by a raised annular surface on the top of the 'T' extending partially between the inner radial limit and the outer radial limit of the bearing member. Preferably, a plurality of elongate first recesses are provided extending radially in the first surface, thereby facilitating flow of lubricant fluid to the space opposite the first surface. Preferably, the first recesses extend partially between the inner radial limit and the outer radial limit of the first surface.

Preferably, a plurality of elongate second recesses are provided extending radially in the fifth surface, thereby facilitating flow of lubricant fluid to the space opposite the fourth surface. Preferably, the second recesses extend partially between the inner radial limit and the outer radial limit of the fifth surface.

Preferably, at a point between the opposite ends of the elongate part of the 'T'-shaped bearing member, a circumferential recess is defined in the surface at the outer radial limit of the bearing member. Preferably, a plurality of first lubrication channels are provided, extending radially between the circumferential recess and the inner radial limit of the bearing member, thereby permitting flow of lubricant fluid between the exterior of the bearing member and the internal cylindrical channel.

Preferably, the bearing member includes a plurality of second lubrication channels, each channel extending axially between a first elongate recess on the first surface and a respective opposite second elongate recess on the fifth surface.

Preferably, the number of first and/or second elongate recesses is between 2 and 8, and preferably 6.

Preferably, the number of second lubrication channels is between 2 and 8.

The bearing preferably further includes a washer, wherein, in use, one surface of the washer abuts the fifth surface of the bearing member and the other surface of the washer is adapted to abut a corresponding surface of a drive element, for example a turbine.

An advantage of the bearing design is that it provides a bearing that is compact in scale. Another advantage is that it is capable of acting as both a journal bearing and a thrust bearing. An advantage is that lubrication is provided by the working fluid, and no separate lubricant supply is needed.

### Coupling

A further problem is that, while magnetic couplings are known, heretofore there has been a lack of a coupling design capable of operating at the high-speed and in a sealed unit that copes with the extremely high pressure differentials encountered in some industries. Often, a problem is that it is not possible to provide such a device with small dimensions.

Thus, there is preferably provided a rotary magnetic coupling, comprising: a first rotary member, including a first shaft having disposed thereon a first magnetic member, said first shaft, in use, being driven by a source of rotational energy, a second rotary member, including a second shaft having disposed thereon a second magnetic member, said second rotary member, in use, receiving rotational energy from the first rotary member through coupling of the first and second magnet members, wherein one of said first and second magnetic members, or both, comprise a plurality of magnet sections disposed at different angular positions with respect to the axis of said first and second shafts.

Preferably, the first rotary member is disposed within a hermetically sealed housing, a portion of the housing being disposed between the first rotary member and the second rotary member and being made of a non-magnetic material. Preferably, the non-magnetic material comprises stainless steel, nimonic alloy, or plastic.

In one embodiment, the first magnetic member comprises an inner generally cylindrical armature portion integral with the first shaft and a plurality of first magnet sections fixedly attached on the exterior of the armature portion; and the second magnetic member comprises an outer generally cylindrical supporting portion integral with the second shaft and a plurality of second magnetic sections fixedly attached to the interior of the supporting portion. Preferably, the first magnetic member further comprises a containment shell, disposed on the exterior of the first magnet sections, for retaining said first magnet sections in position during high-speed rotation of the first shaft. The containment shell may be made of a composite material, for example carbon fibre reinforced plastic (CFRF), Kevlar or glass fibre reinforced plastic (GRP), Preferably, the first magnetic member is disposed inside the second magnetic member and separated therefrom by the portion of the housing. Preferably, the magnet sections comprise dipole magnets the N-S direction of each extending radially.

In another embodiment, the first magnetic member is generally disc-shaped and comprises a first mounting section having fixedly mounted within it the plurality of first magnet sections, the first magnet sections thereby forming a disc shape; and the second magnetic member is generally disc-shaped and comprises a second mounting section having fixedly mounted within it the plurality of second magnet sections, the second magnet sections thereby forming a disc shape. Preferably, the first and second magnet sections form sectors of a disc. Preferably, the first and second magnet sections comprise dipole magnets with the N-S direction of each extending axially. Preferably, said first disc-shaped magnetic member is disposed axially aligned adjacent the second disc-shaped magnetic member and separated therefrom by the portion of the housing.

Preferably, the number of magnetic sections of said first magnetic member, and/or said second magnetic member, is an even number of 2 or more. More preferably, the number of magnetic sections of said first magnetic member, and/or said second magnetic member, is 4.

Preferably, the said magnet sections are made of ferrite material, samarium cobalt or neodymium iron boron.

An advantage of the rotary magnetic coupling is that it is usable at high rotational speeds (e.g. 25,000 to 50,000 rpm). An additional advantage is that it provides a sealed unit preventing escape of the (sometimes harmful or hazardous) working fluid powering the turbine. A further advantage is that a relatively compact design of the turbine is permitted; and the mechanical isolation/magnetic coupling is particularly advantageous in enabling the turbine power to drive an off-the-shelf alternator, such as those found in automotive applications.

The foregoing attributes ensure that the magnetic coupling may advantageously be employed in systems (e.g. Rankine cycle systems) where energy conversion occurs from fluids (gases) at very high rotational speeds.

### Power control

Further drawbacks of available Rankine cycle systems are that they are typically large scale plant operating in the multi MW range, and are not suited to extraction of energy on a smaller scale, from relatively low temperature sources, such as hot waste fluid from small industrial installations, automotive combustion engines, and the like.

Moreover, in situations where electrical energy is being obtained from sources such as waste heat or solar thermal sources, it is desirable for the system being employed to extract the energy with the optimal efficiency.

Most existing Rankine cycle machines are low speed units with synchronous alternators, running at the same frequency as the grid supply. Turbine speed and power control is generally by valves to bypass the turbine. For example, US-B-4,537,032 discloses a parallel-stage modular Rankine cycle turbine in which the load on the turbine is controlled by controlling the operation of each throttle valve. And US-A-2002/0108372 discloses a power generation system including two hot standby organic Rankine cycle turbine systems, in which one Rankine cycle turbine system includes a control valve for opening and closing in accordance with the output of the generator of the other Rankine cycle turbine system.

There is a need for an energy recovery system, and techniques for controlling them, that overcome the aforementioned problems and provides an improved recovery system.

Thus, in accordance with another aspect of the invention there is provided a method carried out in an energy recovery system wherein the electromechanical conversion unit includes an alternator, and the system further comprises a control system coupled to the alternator and adapted to vary the voltage derived from the alternator, the method comprising the steps of: (a) increasing the voltage by one voltage step; (b) measuring the output power of the alternator; (c) if the output power measured in step (b) is less than or equal to the previous output power, (i) decreasing the voltage by one voltage step (ii) repeating the steps of (1) decreasing the voltage by one voltage step (2) measuring the output power of the alternator; while the output power measured in step (c)(ii (2) is more than the previously measured output power, and if the output power measured in step (b) is more than the previous output power, repeating the steps of (iii) increasing the voltage by one voltage step (iv) measuring the output power of the alternator while the output power measured in step (c) (iv) is more than the previously measured output power.

Alternatively, each step of increasing the voltage by one voltage step is replaced by the step of decreasing the voltage by one voltage step, and vice versa.

The amount of the voltage step may be about 1% to 2.5% of the mean voltage. Preferably, step (a) is performed about every second.

The step of measuring the output power of the alternator may comprise measuring an output voltage V derived from the output of the alternator, measuring the output current I derived from the output of the alternator, and computing output power = V*I. Alternatively, the step of measuring the output power of the alternator comprises measuring the output power with a separate power measuring device.

Preferably, the method further comprises converting the alternator voltage from a first frequency to a second frequency. Preferably, the first frequency is higher than the second frequency, and the second frequency is about the frequency of the mains supply. Preferably, said step of converting the voltage comprises: rectifying the voltage output by the alternator using a rectification circuit thereby deriving a DC voltage, and generating an AC voltage from said DC voltage using a power conditioning unit.

The method preferably further comprises storing the last-measured value of the output power.

The invention further provides a programmable control system when suitably programmed for carrying out the method of the invention, the system including a processor, a memory, an interface coupled to the electromechanical conversion unit, and a user interface.

An advantage of the present invention is that it makes possible systems and techniques that maximise efficiency and are applicable in compact, high-speed systems, and in particular in low-power units.

### Working fluid purification

In many conventional energy conversions systems operating as closed systems and employing an expansion device such as a turbine, e.g. Rankine cycle systems, a working fluid is employed, which passes through various stages in the system and is normally in liquid form at some point.

Typically, when the system is initially filled, the working fluid is a liquid, and there is therefore the rest of the system that must be filled with a gas, such as nitrogen.

A problem with such systems is that, if there are non-condensable gases present during the running of the system, the overall performance can be substantially reduced. This is because, for example, with a turbine-based system, the pressure that the turbine gas expands to on exit must be as low as possible, in order to make the turbine pressure ratio (pressure at input : pressure at exit) as high as possible.

Techniques for attempting to deal with this problem have been disclosed in US patents 5,119, 635 and 5,487,765. However, these impose the additional requirement of a separate apparatus for pumping gases out of the condenser, cooling them to condense the working fluid and leave undesirable non- condensable gases, and then pumping the liquid working fluid back into the system.

The present invention seeks to provide a much simpler and easily implemented system for removing impurities from a working fluid.

Thus, there is preferably provided a working fluid purification system for an energy conversion system, the energy conversion system being a closed system with a circulating working fluid circulating in a path therethrough and including an expansion device, for example a turbine, comprising: an expansion tank; a diaphragm within the expansion tank, thereby defining a variable volume connected for receiving said working fluid; and a control valve disposed between said path and the expansion tank, the control valve being adapted to control the flow of fluid to and/or from said variable volume; wherein the control valve is connected via a conduit to a connection point in the path, said connection point being at the highest point of said path.

Preferably, the control valve is mounted at a higher point than said connection point. Preferably, the expansion tank is mounted at a higher point than said control valve.

The system preferably further includes a controller, the controller being adapted to open and close said control valve. Preferably, the controller is configured to perform a purification cycle, said purification cycle comprising opening the control valve for a first predetermined period and closing the control valve for a second predetermined period. Preferably, the controller is configured to perform, in a start-up sequence of predetermined duration after switch-on of the system, a plurality of said purification cycles. Preferably, the plurality of purification cycles comprises about 3 to 5 purification cycles. Preferably, the first predetermined period is about one minute and said second predetermined period is about ten minutes.

The system preferably further includes a pressure sensor coupled to the controller; wherein the controller is configured to perform at least one purification cycle when the pressure indicated by the sensor is above a predetermined level. Preferably the pressure sensor is arranged to sense the pressure at the exit of a turbine (expansion device).

The present invention will now be described, by way of example, with reference to the accompanying drawings in which:
Figure 1 is shows (a) schematic overview of an energy recovery system in accordance with one aspect of the invention, and (b) intermediate electronics modifying the output of the alternator;
Figure 2 is a schematic illustration of the derivation of one source of waste heat in one aspect of the invention;
Figure 3 illustrates in more detail the turbine unit and alternator of Fig. 1;
Figure 4 is an enlarged view of the turbine bearing in Fig. 3:
Figure 5 shows in more detail the bearing member employed in the bearing in Fig. 4, indicating fluid flows;
Figure 6 illustrates an alternative (magnetic) coupling of the turbine unit and alternator of Fig. 1, in another aspect of the invention;
Figure 7 provides various views of a microturbine-based system (a) in isolation, (b) with a recuperator, and (c) and (d) the same systems as (a) and (b), respectively, incorporating, in accordance with aspects on the invention, an energy recovery system;
Figure 8 shows (a) an IC engine based energy generation system, and (b) the same system incorporating, in accordance with another aspect of the invention, an energy recovery system; and
Figure 9 shows an flare stack based energy generation system incorporating, in accordance with another aspect of the invention, an energy recovery system.

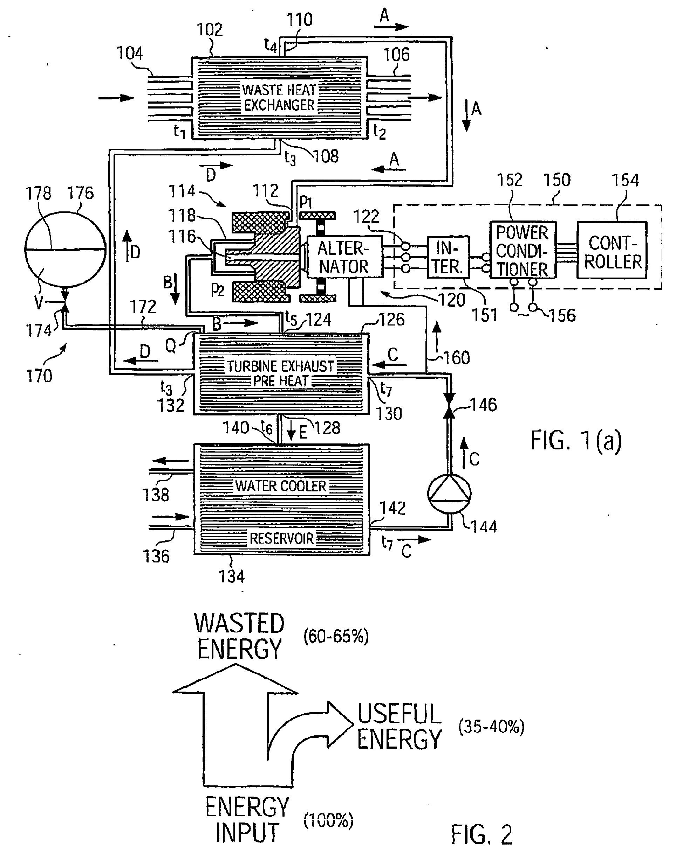

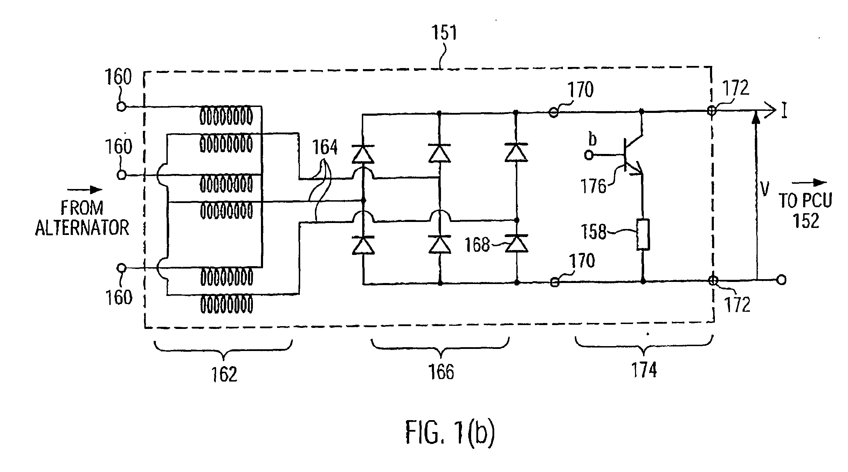

Turning to the drawings, in which like numerals have been used to designate like elements, Fig. 1(a) is a schematic overview of an energy recovery system 100 in accordance with one aspect of the invention. References herein to "energy recovery system" include reference to energy recovery systems that recover energy (e.g. electrical) from sources of energy (e.g. heat) that would otherwise be wasted, and energy conversion systems that convert energy from one form (e.g. heat) to another (e.g. electrical) in circumstances where the original (heat) energy would not have necessarily been wasted but may have been used in its existing form (e.g. to at least contribute to heating a building).

A main heat exchanger 102 has at least one source fluid inlet 104 through which it receives a heated source fluid incorporating the thermal energy that is sought to be recovered by the system. The temperature of the source fluid upon entering the main heat exchanger 102 is designated t1.

The main heat exchanger 102 may be driven by any source of heat, and examples of the sources include hot air, steam, hot oil, exhaust gases from engines, manufacturing process waste hot fluid, exhaust fluids from microturbine-based electricity generation systems, IC engine-based electricity generation systems, flare stacks burning waste gases, etc. Alternatively, the heat source may be solar thermal energy that heats a suitable fluid (e.g. heat transfer oil) that forms the source fluid for the main heat exchanger 102.

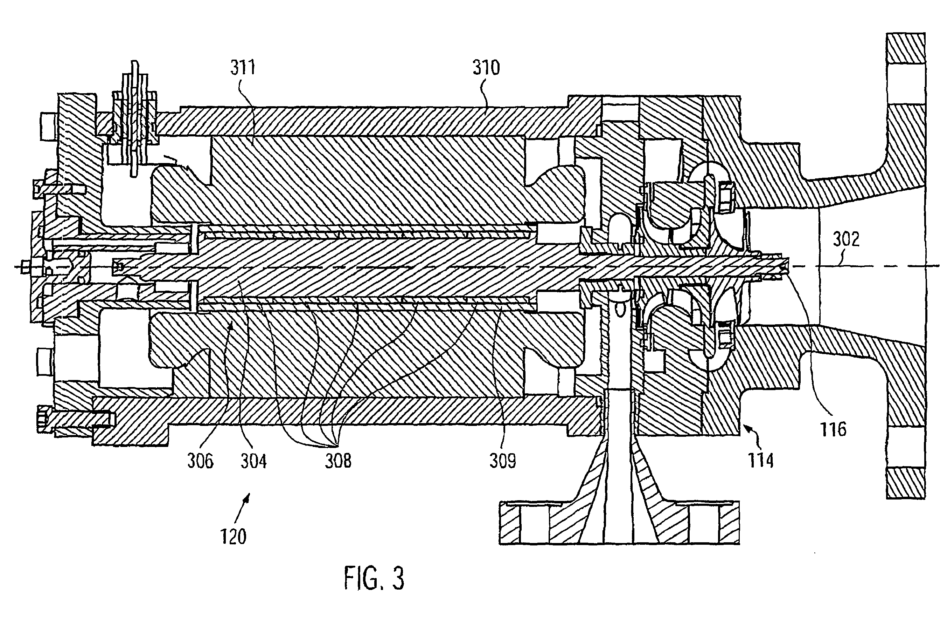

Referring briefly to Fig. 2, this is a schematic illustration of the derivation of one source of waste in one aspect of the invention: an important example of wasted energy is the ubiquitous internal combustion engine, be it petrol, diesel or gas fuelled, reciprocating or turbine. The best simple cycle fossil fuelled engine (other than very large power stations or marine engines) will be between 35-40% efficient : this means that 60-65% of the energy from the fuel used to drive the engine is lost as waste heat.

Returning to Fig. 1(a), the source fluid exits the main heat exchanger 102, at a reduced temperature t2, via at least one source fluid outlet 106.

The main heat exchanger 102, which is suitably of the cross counter flow type, also has a working fluid inlet 108 and working fluid outlet 110, through which it receives (as a liquid at temperature t3) and despatches (at temperature t4), respectively, the working fluid of the system. The working fluid, which is heated and vapourised within the main heat exchanger 102, is carefully chosen so that its thermodynamic and chemical-properties are suitable to the system design and the operational temperatures and pressures. In one embodiment, the working fluid is HFE-7100.

After exit from the working fluid outlet 110 of the main heat exchanger 102, the gaseous working fluid flows in the direction of arrows A to the turbine inlet 112 of turbine unit 114. The working fluid arrives at the turbine unit 114 at pressure p1, loses heat and pressure in driving the turbine (not shown) mounted on turbine shaft 116 within the turbine unit 114, and exits the turbine unit 114 via turbine outlets 118 at pressure p2, which is substantially lower than p1. In one embodiment, the pressure p1 is 11. 5 bar absolute and the pressure p2 is 1.0 bar absolute.

In one embodiment, the turbine shaft 116 is mounted on a bearing (not shown) and is mechanically coupled to an alternator 120, e.g. the turbine and alternator armature (not shown) are mounted on a common shaft 116. In this way, high-speed rotation of the turbine shaft 116 causes electrical energy to be generated in the alternator 120, the consequent voltage appearing at the alternator output 122. The coupling of the turbine shaft 116 to the alternator 120 is described further hereinbelow with reference to Figs. 3 to 5.

After exit from the turbine outlets 118, the working fluid travels in the direction of arrows B to inlet 124 of a second heat exchanger 126, which acts as a preheater of the working fluid using the turbine exhaust. The working fluid is therefore input to the second heat exchanger 126 at temperature t5 and exits via outlet 128 at a lower temperature t6. At the same time, the second heat exchanger receives another flow of working fluid (in the direction of arrows C), below its boiling point and in liquid form, via inlet 130 at temperature t7. In the second heat exchanger 126, thermal energy is transferred to the flow of working fluid arriving at inlet 130, the working fluid exits via outlet 132 at temperature t3, and flows (in the direction of arrows D) to the inlet 108 of the main heat exchanger 102.

The system also includes a condensing unit (or water cooler) 134, in which cold water arrives via inlet 136 and exits via outlet 138. In operation, working fluid from the second heat exchanger 126, flowing in the direction of arrow E, arrives in the condensing unit 134 via inlet 140, is cooled and condensed into a liquid in the condensing unit 134, and then departs via outlet 142. This liquid working fluid (at temperature t7), is forced by pump 144 via valve 146 in the direction of arrows C and forms the second supply of working fluid arriving at second heat exchanger 126, to begin the cycle all over again. A separate fluid line 160 delivers liquid working fluid to the bearing coupling the turbine unit 114 and the alternator 120, for lubrication.

Thus, the system operates on a Rankine cycles and is sealed, so that there is no escape or consumption of the working fluid, which simply cycles through its various phases.

In one embodiment, the system includes a control system 150, to control the power output by the system. Most existing Rankine cycle machines are low speed units with synchronous alternators, running at the same frequency as the grid supply. Turbine speed and power control is generally by valves to bypass the turbine. However, the system according to one aspect of the present invention employs a high-speed alternator 120, and a power-conditioning unit is preferably used to convert the high frequency alternator output to mains frequency.

More specifically, the control system includes intermediate electronics 151, a power conditioning unit (PCU) 152 and a controller 154. The power output by the alternator 120 at outputs 122 is at a very high frequency, due to the high-speed rotation of the turbine shaft, and is modified by intermediate electronics 151, which is described in more detail in Fig. 1(b).

Referring to Fig. 1(b), the outputs 122 of the alternator 120 are connected to the inputs 160 (three of them, for a 3-phase alternator) of intermediate electronics, generally designated 151. The first stage of intermediate electronics 151 is an optional transformer stage 162, for boosting the voltage on each of the lines: this ensures, when needed, that there is sufficient DC voltage eventually appearing at the PCU 152 that a complete 240 V sine wave (as per UK mains supply) can be generated at the output of the PCU 152. In certain embodiments, however, the voltage level output by the alternator 120 is high enough such that the transformer stage 162 can be omitted.

Next, the voltages output by the transformer stage 162 at 164 pass to a rectification stage 166, comprising a set of six rectification diodes 168, as is well known in the art. Thus, a rectified, near DC voltage is supplied at outputs 170 of the rectification stage 166, and this, in normal operating conditions appears at the outputs 172 of the intermediate electronics 151.

In the event of a sudden loss of grid connection all alternator load will be lost. This could cause a significant overspeed of the alternator 120, and so as well as a dump valve (not shown) to bypass the turbine, the intermediate electronics 151 includes a safety stage 174 that includes a dump resistor 158 to supply a load to the alternator 120 in the event of loss of grid connection, to prevent overspeed.

A transistor 176 is in series with the dump resistor 158 across the outputs 172, with the base b of the transistor 176 being driven by an overspeed detection unit (not shown). The latter supplies a PWM signal to the transistor 176, the duty cycle of which is proportional to the extent of overspeed, so that the higher the overspeed the greater the load applied by the dump resistor 158.

As can be seen in Fig. 1(b), the power supplied at outputs 172 (referred to herein as DC bus) is at voltage V and current 1, and this is supplied to the PCU 152. The PCU 152, which is known in the art, is adapted to convert power from DC to AC at the mains frequency (50 Hz in UK) and voltage (240 V in UK). The PCU in turn is able to vary the DC bus voltage so as to adjust the power output of the system.

Varying the DC bus voltage (V in Fig. 1(b)) in the power conditioning unit 152 controls the speed of the turbine shaft 116. Reducing the bus voltage increases the load on the alternator 120, causing more current to be drawn from the alternator. Conversely, increasing the bus voltage causes the alternator current to drop. By calculating the power (e.g. using P=VI, or using a power measuring device) before and after the bus voltage change, it can be determined whether the power was increased or decreased by the bus voltage change. This allows the point of maximum power output from the alternator 120 to be found and then continually 'tracked' by altering the bus voltage.

In one embodiment, the voltage supplied by the alternator at no load is 290 Vac (all voltages are measured line-to-line) on each of the three phases at 45,000 rpm, the maximum rated speed of the alternator 120. The lowest speed at which power can be generated is 28,000 rpm, at which point the voltage is 180 Vac at no load. Increasing the load will also reduce the alternator voltage: for example at 45,000 rpm the voltage will be 210 Vac at 6.3 kW.

The control of power output by varying the bus voltage may be implemented by suitable analogue or digital electronics, microcontroller, or the like. It may also be controlled manually using a personal computer (PC) as the controller 154. Preferably, however, the power output is controlled automatically using a suitably programmed PC or other computing machinery as the controller 154. In either case, the PC communicates with the PCU 152 by means of a RS232 serial communications device, although a RS422 or RS485 adapter could also be used, as is known in the art. The PC may thus, at any time, have a reading of V and I, thereby enabling the instantaneous power to be known.

In the case of automatic PC control, the method of control may be by means of suitable software implementing the following.

While system is ON do
Increase bus voltage by one voltage step
Measure new power (=VI)

```
 if new power less than or equal to old power then decrease voltage by one voltage step
         do
         decrease voltage by one voltage step
         measure new power
         while new power more than old power
 else    do
         increase voltage by one voltage step
         measure new power
         while new power more than old power
```

It will be appreciated by persons skilled in the art that the size of the voltage step is determined by operating conditions and is a suitably determined small fraction (e.g. 1-2.5%) of the mean bus voltage.

In one embodiment, the voltage step change is made about every second.

One other optional feature incorporated in the system is a working fluid purification system, generally designated 170 in Fig. 1. As mentioned hereinabove, if there are non-condensable gases present during the running of the system, overall performance can be substantially reduced, i.e. the pressure ratio of the turbine is lower than it should be. For example, in the turbine mentioned in the examples herein, the input pressure p1 is projected to be 20 bar; and if the output pressure p2 is 2 bar rather than the intended 1 bar, the pressure ratio is 10 rather than 20, giving significantly reduced performance (1 bar = 105 N/m²).

A difficulty is that when filling the system initially, the working fluid is a liquid and the rest of the system must be filled with a gas, for example nitrogen. When performing this step the pressure can be reduced to below atmospheric pressure to reduce the mass of nitrogen in the system. However, the pressure cannot be reduced too much, or cavitation will occur in the pump. Therefore, the optimum way to remove the unwanted gas from the system is during the running of the system.

The working fluid purification system 170 includes a conduit 172 connected at one end to a point Q on the second heat exchanger (preheater) 126 and at the other end to control valve 174 which may be at the base entry/exit port 176 of an expansion tank 176, which, in one example, may be the type of expansion tank used in central heating systems. The expansion tank 176 has a flexible membrane or diaphragm 178 so that it may in its lower part contain a variable volume V of gas and/or liquid.

In the example (6kW system) mentioned hereinafter, the measurements are as follows.
System volume 70 litres
Fluid volume 18 litres
Expansion tank volume 50 litres

As can be seen, when the system is initially filled with fluid, there will be 52 litres of nitrogen. Lowering the pressure of this gas with a vacuum pump reduces the amount of gas that has to be held in the expansion tank 176, meaning that it can be made smaller. This pumping also causes the diaphragm 178 expand downwards into the expansion tank, making the whole of the tank, or nearly all of it, available for receiving gases.

As nitrogen gas has a lower density than that of the working fluid vapour, it tends to accumulate at the highest location within the system. At this point (Q in Fig. 1 the fluid can be taken away to the expansion tank 176, the diaphragm 178 allowing expansion to take place, enlarging volume V; i.e., with the control valve 174 open, the gases are allowed to move slowly into the expansion tank 176. As the nitrogen has a lower density than the working fluid, most of the contents of the expansion tank 176 will be nitrogen, with just a little working fluid.

Once the valve 174 has dosed, the expansion tank 176 and its contents cool down naturally, causing the working fluid to condense. The next time the control valve 174 is opened, the (now liquid) working fluid flows back under gravity back into the main circuit of the system (via control valve 174 and conduit 172), while the non-condensable gases tend to stay in the expansion tank 176 due to their lower density. A cycle of (a) control valve OPEN for a fixed period, followed by (b) control valve CLOSED for a fixed period is used to purify the working fluid, and this cycle may be repeated several times (for example about 3 to 5 times), during the start up of the energy recovery system, to collect as much nitrogen in the expansion tank 176 as possible. In the aforementioned (6kW) system, the control valve 174 is opened for one minute and then closed for ten minutes. The opening and closing of the control valve 174 may be performed manually, or it may be performed automatically by a suitable controller, in this case controller 154.

The system preferably also includes a pressure sensor coupled to the controller 154, the pressure sensor being positioned to sense the pressure at the exit of the expansion device (turbine); and the purification cycle may be repeated if pressure starts to build up during normal running of the system and it is detected at the pressure sensor that the pressure has exceeded a predetermined safe threshold.

Figure 3 illustrates in more detail the coupling of the turbine unit and alternator of Fig. 1(a). Here, the turbine unit is generally designated 114 and the alternator generally designated 120. The turbine shaft rotates about an axis 302 and is integral with a section 304 that forms part of the rotor 306 of the alternator 120. Generally partial cylinder permanents magnets 308 are disposed on the section 304 of the shaft 116. Retaining the magnets 308 in position on the shaft 116 is a retaining cylinder 309: this retaining cylinder (made of a non-magnetic material such as CFRP) ensures that the magnets 308 are not dislodged during high-speed rotation of the shaft 116. The stator 311, incorporating a plurality of windings (not shown) in which current is generated, is mounted around the rotor 306, as is well known in the art, and is enclosed within housing 310. The section 304 of the shaft 116 is supported at one end of the housing 310 by journal bearing 312, and at the other end by the bearing generally designated 314, which is described in more detail hereinafter.

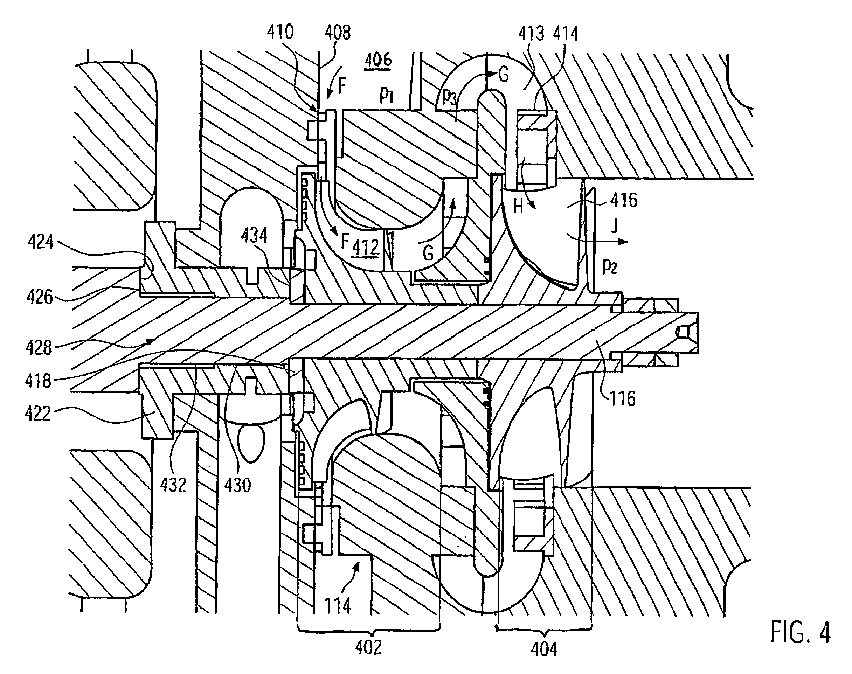

Figure 4 is an enlarged view of the turbine-bearing coupling in Fig. 3. As can be seen, the turbine unit 114 includes a first turbine stage 402 and a second turbine stage 404. High pressure heated working fluid present (at pressure p1) in the space 406 within the turbine unit housing 408 enters via inlet port 410 of the first turbine stage 402 and flows in the direction of arrow F so as to be incident upon a first series of vanes 412 securely mounted on the shaft 116. The fast flowing working fluid thereby imparts rotational energy to the shaft 116. Upon exiting the first turbine stage 402 (at pressure p3), the working fluid flows in the direction of arrows G.

Next, the working fluid at (intermediate) pressure p3 (which is substantially less than p1, but still relatively high) passes, via conduit 413, to the next turbine stage 404. Here, the working fluid enters via inlet port 414 of the second turbine stage 404 and flows in the direction of arrow H so as to be incident upon a second series of vanes 416 securely mounted on the shaft 116. The fast flowing working fluid thereby imparts further rotational energy to the shaft 116. Upon exiting the second turbine stage 404 (at pressure p2), the working fluid flows in the direction of arrow J. Thus, p1 > p3 > p2.

As can be seen, the axial and radial dimensions of the vanes 416 of the second turbine stage 404 are greater than those of the vanes 412 of the first turbine stage 402. In one embodiment, there are two turbine stages of equal diameter, and the axial dimension of the first turbine stage is 3/10 diameter, and the axial dimension of the second turbine stage is 4/10 the diameter. In another embodiment, there are three turbine stages. The diameters of the first, second and third turbine stages are in the ratio 4: 5: 6. The axial dimension of the first turbine stage is 0.375 x the respective diameter. The axial dimension of the second turbine stage is 0.35 x the respective diameter. The axial dimension of the first turbine stage is 0.33 x the respective diameter.

The choice of material from which the turbine stages are manufactured is important. In one embodiment of the system, aluminium (AI 354; a high-strength casting alloy) is used; and in a larger (120kW) system, stainless steel (E3N) is used.

The main requirement for the material is to have a high ratio of ultimate tensile strength (UTS) to density. When spinning at high speed, the higher the material density, the higher the stresses in the turbine, and so more dense materials are also required to have a proportionally higher strength.

In accordance with one embodiment, the turbine stages (also referred to as turbine wheels) incorporating the vanes are made of engineering plastics, such as polyetheretherketone (PEEK) filled with 40% carbon fibre. Such materials have the advantage of very low cost as the turbine wheels can be produced by injection moulding. The plastic turbine wheels are mounted, using a suitable fixing technique, on, for example, a steel shaft. The properties of various turbine materials are set out in Table 1.

**Table 1**

| Material | Ultimate tensile strength | Density | UTS/density |
|---|---|---|---|
| | (UTS) (Mpa) | kg/cu.m) | |
| AI 354 | 331 | 2710 | 0.122140221 |
| SS E3N | 760 | 7800 | 0.097435897 |
| PEEK 40% CF | 241 | 1460 | 0.165068493 |
| Ultern 2400 | 248 | 1608 | 0.154228856 |
| Valox 865 | 179 | 1634 | 0.109547124 |

As can be seen from Table 1, the best material (highest UTS/density ratio) is PEEK 40% CF. Two other high performance plastics (Ultern 2400 and Valox 865) are also included in Table 1 to illustrate the breadth of plastics available and suitable for use in the manufacture of the turbine stages. A consideration in the use of plastics (last three rows in Table 1) is the effect on operating temperature (turbine inlet temperature) that can be employed. Whereas in systems with aluminium turbines this temperature can be up to 200°C, and can be even higher with stainless steel turbines, systems with, for example, PEEK 40% CF turbines can only be used up to 150°C. In the latter case, the cycle of the overall system 100 is designed to take account of this operating temperature.

Returning to Fig. 4, a washer 418 is provided fixedly attached to a shoulder 420 of the turbine stage 404 and has its other surface abutting a bearing member 422, which is described in more detail hereinafter, and in operation, the working fluid permeates the space between the washer 418 and the bearing member 422, so as to provide lubrication.

The bearing member 422 has a generally T-shaped cross-section. It includes a first bearing surface 424 on a raised portion on the top of the T; and in use, this surface is disposed opposite a second bearing surface 426, of substantially the same annular shape and size, on the shaft 116 near the armature section 304. The bearing member 422 has a central cylindrical channel 428, thereby defining a cylindrical third bearing surface 430 on bearing member 422 that is disposed opposite fourth bearing surface 432 on the outside of shaft 116. A fifth bearing surface 434 is provided on the bearing member 422 on the end thereof opposite the first bearing surface 424, and this is disposed opposite a respective surface of the washer 418. In one embodiment, the working fluid permeates all the spaces defined opposite bearing surfaces 424,430 and 434 of bearing member 422, thereby providing lubrication of the bearing, The working fluid is provided as a liquid from the pump 144 (see Fig. 1(a)) via a fluid pipe 160, separate from the main flows, communicating with the outer surface of the bearing member 422.

It will be appreciated that the bearing in this form provides a bi-directional thrust bearing: the bearing member 422 has two bearing surfaces 424 and 434, enabling it to receive thrust in two directions.

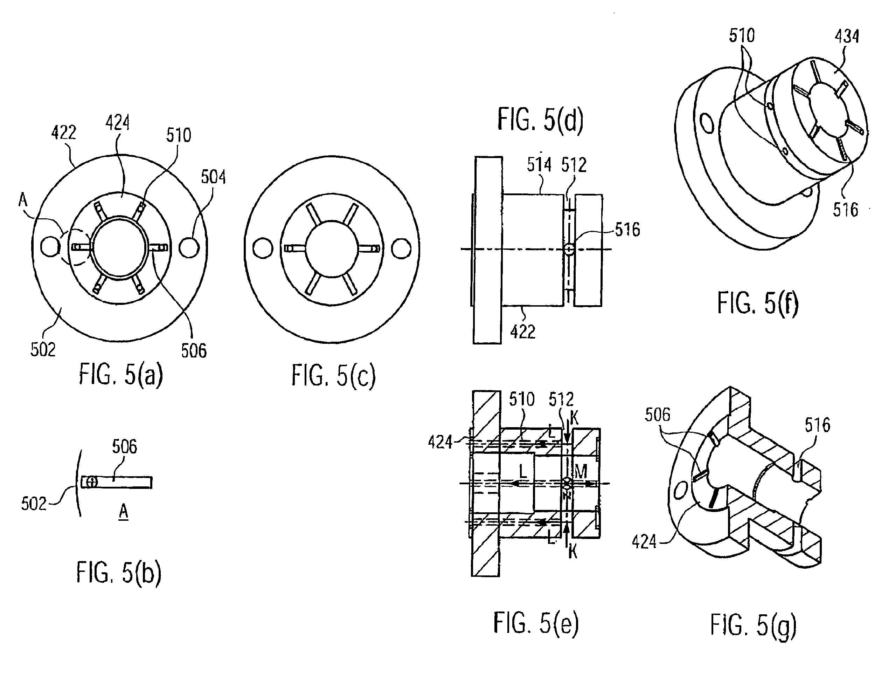

Figure 5 shows in more detail the bearing member 422 employed in the bearing in Fig. 4, indicating fluid flows. Figure 5 (a) is an end view showing the first bearing surface 424. The flange 502, forming the top of the T, is provided with two screw holes 504 enabling the bearing member 422 to be screwed or bolted to the housing 310 of the alternator 120. Six equally spaced radially extending first elongate recesses (slots) 506 are disposed in the first bearing surface 424, extending from radial inner extremity of the first bearing surface 424 towards the outer radial extremity of the firs bearing surface 424, enabling the passage of lubricant fluid. As can be seen in Fig. 5 (b), each recess 506 does not quite reach the outer extremity 508 of the first bearing surface 424. In the embodiment of Fig. 5 (a), each recess 506 is provided with an axially extending second lubrication channels 510, which extend to a circumferential recess (or groove) described hereinafter.

In other embodiments, there may not be a second lubrication channel 510 in each recess 506: for example, Fig. 5 (c) illustrates the case where a second lubrication channel 510 is provided in only two of the recesses 506.

Referring to Fig. 5 (d), a circumferentially extending recess (groove) 512 is provided in the outer surface 514 of bearing member 422. It can been seen that first lubrication channels 516 (here, four of them, equally circumferentially spaced) extend between the circumferentially extending recess 512 and the interior of the bearing member 422, allowing passage of lubrication fluid. As best seen in Fig 5(e), the second lubrication channels 510 extend between the first bearing surface 424 and the circumferential recess 512. The ends of the second lubrication channels 510 are also shown in Fig. 5(f). The latter figure also shows a plurality (here six) of second elongate recesses (slots) 516 disposed in the fifth bearing surface 434. Two of the second elongate recesses 516 have second lubrication channels extending therefrom to the aforementioned circumferential recess 512. Figure 5 (g) is a partial cross-section showing the recesses and channels in another way.

Returning to Fig. 5 (e), the lubrication fluid enters the bearing member 422 in the direction of arrows K. The fluid flows in the direction of arrows L to the first elongate recesses 506 on the first bearing surface 424, in the direction of arrow M to the second elongate recesses 516 on the fifth bearing surface 434, and in the direction of arrow N (into the paper) to the interior of the bearing member and the third bearing surface 430, thereby lubricating the bearing.

### Example 1

The specific values for one example (6kW version) of the system are set out below. All pressures are in bar (absolute). All temperatures are in C. The working fluid is HFE-7100.

| t1 | t2 | t3 | t4 | t5 | t6 | t7 |
|---|---|---|---|---|---|---|
| 180.0 | 123.4 | 111.0 | 165.0 | 130.0 | 65.0 | 55.0 |
| | | | | | | |

| p1 | p2 | p3 | | | | |
|---|---|---|---|---|---|---|
| 11.5 | 1.0 | 3.4 | | | | |

### Example 2

The specific values for a second example (120kW version) of the system are set out below. All pressures are in bar (absolute). All temperatures are in C. The working fluid is hexane.

| t1 | t2 | t3 | t4 | t5 | t6 | t7 |
|---|---|---|---|---|---|---|
| 225.0 | 138.8 | 123.8 | 210.0 | 145.9 | 74.0 | 64.0 |
| | | | | | | |

| p1 | p2 | p3 | | | | |
|---|---|---|---|---|---|---|
| 19.5 | 1.0 | - | | | | |

The results from the system demonstrate a very useful thermodynamic efficiency (usable electricity out to heat in) for the heat recovery and solar thermal industries - 10% for a source fluid input at 110°C to 22% for a source fluid input at 270°C.

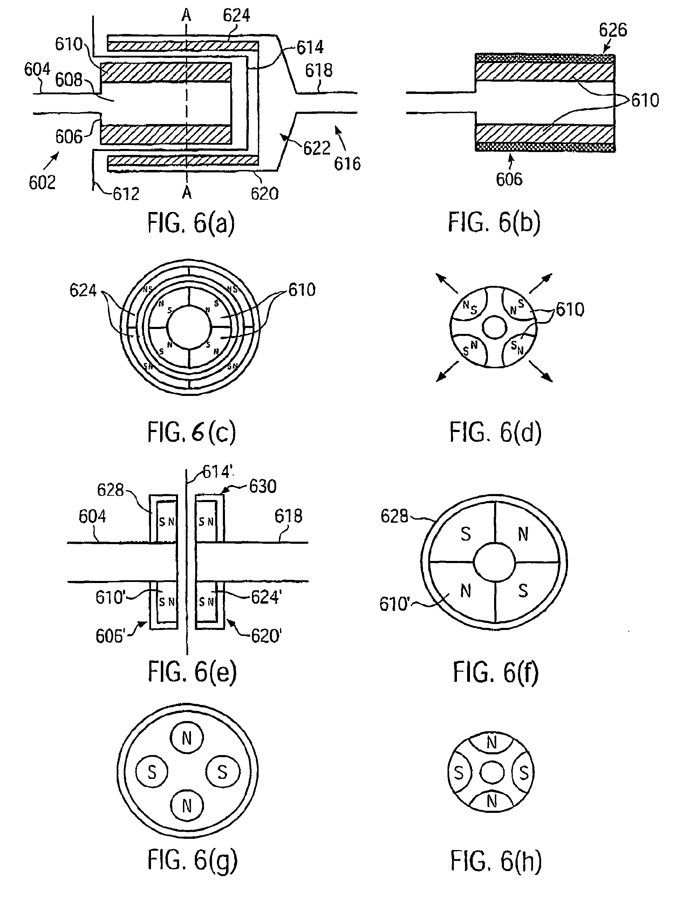

Referring to Figure 6, this illustrates an alternative (magnetic) coupling of the turbine unit and alternator of Fig. 1(a), in another aspect of the invention. The view in Fig. 6 (a) is an axial cross-section of the coupling, showing a first rotary member 602 formed of turbine shaft 604 and a first magnetic member 606. in turn, the first magnetic member 606 comprises an armature portion 608, made of steel or iron, integral with the shaft, and a plurality of magnet sections 610, to be described further hereinbelow.

The first rotary member 602 is hermetically sealed inside a housing 612 that contains the turbine (not shown) and working fluid, the housing including a cylindrical portion 614 containing the first magnetic member 606. At least the portion 614 is made of a non-magnetic material, such as stainless steel, nimonic alloy or plastic.

A second rotary member 616 comprises a second shaft 618 and a generally cylindrical second magnetic member 620 integral therewith. The second magnetic member in turn comprises an outer supporting member 622 having a plurality of second magnet sections 624 fixedly attached to the interior thereof.

As best shown in Fig. 6 (b), the first rotary member 602 may have a composite containment shell 626 around at least the cylindrical part thereof, so as to maintain the first magnet sections 610 in place during high-speed rotation. The containment shell may be made of a composite such as carbon fibre reinforced plastic (CFRP), kevlar, or glass fibre reinforced plastic (GRP).

Figure 6 (c) is a transverse cross-section at A-A in Fig. 6 (a). This shows the first magnet sections 610 and second magnet sections 624 in more detail : in this case there are four of each. The magnet sections are elongate, with a cross-section similar to the sector of a disc. The magnet sections are permanent magnets formed of a suitable material, such as ferrite material, samarium cobalt or neodymium iron boron. The direction of the North-South direction for the magnet sections is radial, as schematically illustrated in Fig. 6 (d).

Turning to Fig. 6 (e), this shows an alternative embodiment, in which the first magnetic member 606' and the second magnetic member 620' are substantially disc-shaped. The first magnetic member 606' comprises a first mounting section 628 and first magnet sections 610', and the second magnetic member 620' includes a second mounting section 630 and second magnet sections 624'. As before, a non-magnetic portion 614' of the housing (similar to 614 and made of the aforementioned non-magnetic material) separates the faces of the disc-shaped magnetic members 606'and 620', which are in close proximity.

The arrangement of the poles for the magnet sections one or both of the first and second magnetic members 606',620' is illustrated schematically in Fig. 6(f). As also illustrated in Fig. 6(g), the polarity of the face of the magnet sections 610' (or 624') alternates as you go tangentially from magnet section to magnet section.

These magnet arrangements permit coupling and transfer of rotational energy and torque from the turbine shaft 604 to the shaft 618 of the alternator, and are adapted to do so at relatively high speeds, e.g. 25,000 to 50,000 rpm.

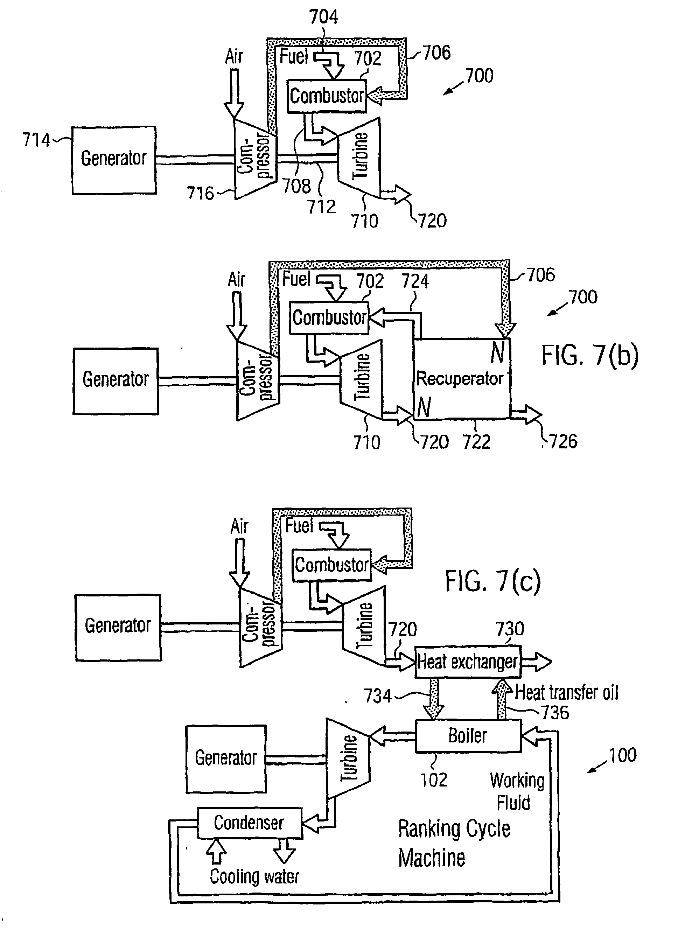

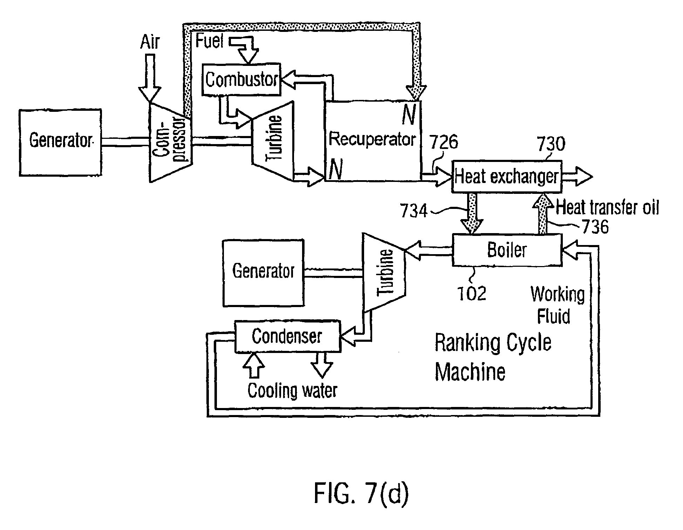

Figure 7 provides various views of a microturbine-based system (a) in isolation, (b) with a recuperator, and (c) and (d) the same systems as (a) and (b), respectively, incorporating, in accordance with aspects on the invention, an energy recovery system.

Referring to Fig. 7(a), this shows a microturbine system generally designated 700. Such systems are typically rated of the order of 60kW and are used in medium to large buildings (residential commercial, government, etc.) to generate electricity from the onsite combustion of fuel.

The microturbine system 700 includes a combustor 702 fed by a fuel supply line 704 and air supply line 706 providing oxygen-containing gas, e.g. air. The fuel supplied via line 704 may be, for example, natural gas, diesel, or kerosene. The exhaust hot gases from the combustor 702 are conveyed via exhaust conduit 708 to a turbine 710 where they impart rotational energy to the turbine shaft 712. The turbine shaft 712 drives both a generator 714 (e.g. including an alternator, as is well known in the art, thereby generating electrical energy) and a compressor 716. The compressor 716 takes air via inlet 718, compresses it and provides it at raised pressure via air supply line 706 to the combustor 702.

The exhaust outlet 720 of the turbine 710 typically releases still-hot gases into the atmosphere, thereby wasting heat; although some heat energy in the exhaust gases may be used for providing heat within the building at which the microturbine, at least some of the heat is lost in the release of hot gases. For example, in some systems, the electricity generated can be of the order 60kW and the heat generated of the order 400kW. The electrical efficiency of the system can be improved by adding a component.

Figure 7 (b) shows an alternative configuration of the microturbine system 700 of Fig. 7(a): here, a recuperator 722 is additionally employed, fed by the hot exhaust gases at the outlet 720 of the turbine 710. The recuperator 722 may be an off-the-shelf heat exchanger, but is suitably a heat exchanger custom-designed for the purpose. Here, the air supply line 706 is not connected to the combustor 702 but feeds the recuperator 722. Thus, in use, the recuperator 722 extracts heat from the exhaust gases of the turbine 710 and uses it to preheat the air that is passed via recuperated air supply line 724 to the combustor 702. The recuperator 722 nevertheless still release still-warm exhaust gases via recuperator outlet 726.

The effect of the recuperator on the system can be seen in the first two rows in Table 2.

**Table 2**

| System | Electrical power output (Kw) | | | Heat output (to 100°C) | Electrical efficiency |
|---|---|---|---|---|---|
| | Microturbine | ERS | Total | | |
| Microturbine | 60.0 | 0.0 | 60.0 | 200.0 | 16.0 |
| Recuperated microturbine | 60.0 | 0.0 | 60.0 | 100.0 | 26.0 |
| Microturbine with ERS | 60.0 | 32.5 | 92.5 | 13.5 | 24.7 |
| Recuperated microturbine with ERS | 60.0 | 14.5 | 74.5 | 13.0 | 34.8 |

The data in the second two rows will be discussed hereinafter. It will be seen that the heating of the air supply by the recuperator results in improved heat utilisation and therefore increased electrical efficiency (26% versus 16%) of the system in Fig. 7(b). However, a disadvantage is that a lot of energy is still embodied in the heat of the exhaust gases, and the electrical efficiency has not been optimised. Also, recuperators are expensive and unreliable, and if they fait during operation they stop the entire system running.

Figures 7 (c) and (d) illustrate the same systems as (a) and (b), respectively, incorporating, in accordance with aspects on the invention, an energy recovery system (ERS), generally designated 100. The energy recovery system 100 is suitable the same as the system described hereinabove with reference to Fig. 1(a), and will therefore not be discussed further in detail.

In the arrangement of Fig 7 (c), the turbine exhaust 720 of the turbine 710 feeds via line 728 an intermediate heat exchanger 730, which in turn has an intermediate heat exchanger exhaust outlet 732 that, in use, releases exhaust gases at a lower temperature than at the turbine exhaust 720. In operation, heat transfer oil (e.g. BP Transcal N) circulates between the intermediate heat exchanger 730 and the main heat exchanger (or boiler) 102 of the energy recovery system 100 via lines 734 and 736. The heat in the heat transfer oil is transferred to the working fluid in the main heat exchanger, thereby providing the source of heat from which electrical energy is derived as described above with reference to Fig. 1, etc.

In the arrangement of Fig. 7(c), it is the recuperator outlet 726 that feeds the intermediate heat exchanger 730, so that the amount of heat available to be transferred in the intermediate heat exchanger 730 is less than in the previously described arrangement. The operation is, however, the same.

Advantageous effects of this use of the intermediate heat exchanger 730 include the separation of the (Rankine cycle) energy recovery system from the potentially very high exhaust temperatures, enablement of better control of the system, and allowing operation of the microturbine 700 without (i.e. independent of) the energy recovery system 100.

Further benefits are apparent when considering a particular example (see the third and fourth rows of Table 2), in this case, a 60kW microturbine.
1. The overall electrical efficiency of the system is substantially increased: in the system of Fig. 7(c) it is raised almost to the level of the recuperated system of Fig. 7(b). In the recuperated system (Fig. 7(c)), it is increased to almost 35%, high for a unit of this size.
2. The overall electrical output is increased. The unrecuperated microturbine (Fig. 7(c)) now gives 92.5kW, and the recuperated microturbine (Fig. 7(c)) gives 74.5kW.

As indicated, unlike with the recuperator 722 in the system of Fig. 7(b), a further advantage of the use of the energy recovery system 100 is that if it fails or has to be shut down during operation, the microturbine system 700 is not affected and can go on running regardless of the state of the energy recovery system 100. The only drawback of the system is that the heat available in the exhaust (column 5 in Table 2) is now much lower : it is now dumped at around 50 C, too low to be of much use. However, the object is to extract more useful electricity.

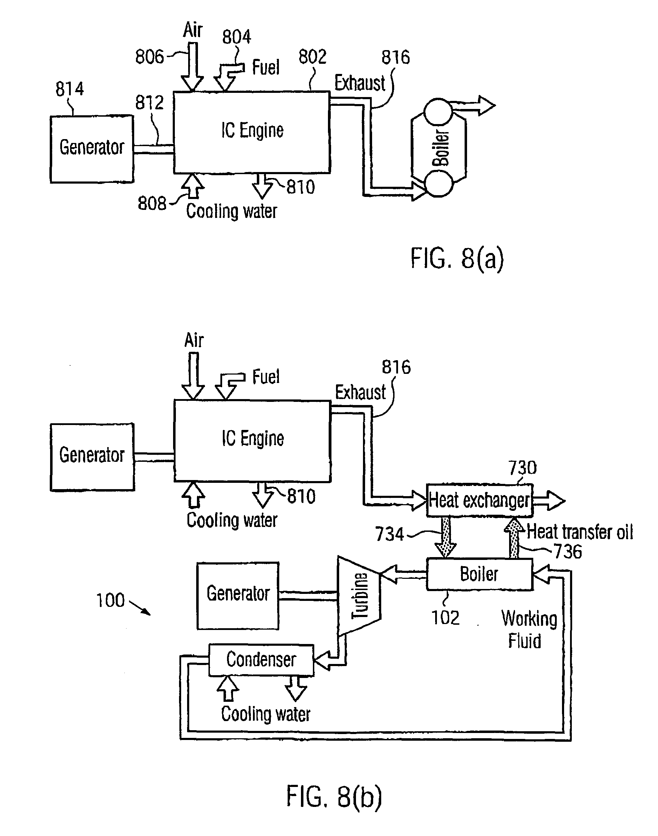

Figure 8 shows (a) an IC engine based energy generation system, and (b) the same system incorporating, in accordance with another aspect of the invention, an energy recovery system. Referring to Fig. 8(a), the energy generation system, generally designated 800, includes a reciprocating IC engine 802 having fuel supply line 804 and air supply line 806. Cooling of the IC engine 802 is facilitated by cooling water inlet 808 and outlet 810 to reduce the temperature of the engine during operation. The IC engine, using well-known techniques, provides drive via gears, couplings, etc. as appropriate, and shaft 812 to a generator 814, e.g. an alternator, In the system, as is well known, hot exhaust gases are despatched, during the exhaust stroke of the IC engine 802, via exhaust outlet 816 : these hot gases feed an exhaust gas heat exchanger or boiler 818 used for combined heat and power applications.

Turning to Fig, 8(b), this shows the system of Fig. 8(a) incorporating the energy recovery system 100 of Fig. 1(a). Here, the boiler 818 is replaced by the intermediate heat exchanger 730 (as in Fig. 7(c)), which transfers heat to the energy recovery system 100 by the heat transfer oil circuit provided by lines 734 and 736.

In the system of Fig. 8(b), the engine cooling water output from outlet 810 is also available for heat, an this is unaffected by the deployment of the energy recovery system 100 in this system.

As with the systems of Figs 7(c) and (d), the presence of the energy recovery system 100 increases electrical power output and raises electrical efficiency. Table 3 illustrates the results for a typical 90kW reciprocating natural gas engine.

**Table 3**

| System | Electrical power output (kW) | | | Heat output-engine cooling water (kW) (90°C) | Heat output-exhaust gas (kW) | Electrical efficiency (%) |
|---|---|---|---|---|---|---|
| | Reciprocating engine | ERS | Total | | | |
| Reciprocating engine | 90 | 0.0 | 90.0 | 63.0 | 77.0 | 33.0 |
| Reciprocating engine with ERS | 90.0 | 7.0 | 97.0 | 63.0 | 0.0 | 35.6 |

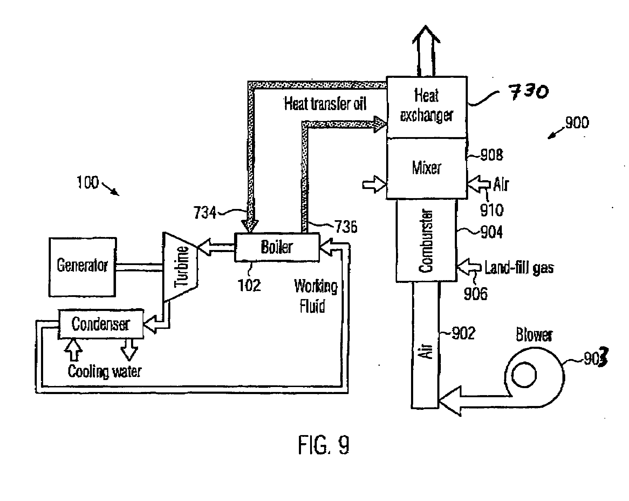

Figure 9 shows a flare stack based energy generation system incorporating, in accordance with another aspect of the invention, an energy recovery system 100. Flare stacks are tower-like structures employed at landfill sites, oilfields, and other sites where there is an excess, or waste product, gas supply incorporating combustible gases.

At land fill sites, landfill gas builds up and must be disposed of, and often it is very polluting. The landfill gas is mainly methane with many impurities. The composition for one typical site is indicated in Table 4. However, other sites report getting over 50% methane; the type and quantity of the constituents vary considerably depending on the type of waste in the landfill.

**Table 4**

| Constituent | Volume |
|---|---|
| CH₄ | 35% |
| N₂ | 20% |
| O₂ | 5% |
| CO₂ | 40% |
| H₂S | 232ppmv |
| VOCs | 743ppmv |

Returning to Fig. 9, as can be seen the flare stack 900 includes a base stage 902 into which air is blown via a blower 903. Immediately above the base section is a combustion stage 904 into which landfill gas is passed (including by pumping) via inlet 906. Above the combustion stage 904 is a mixer stage 908 in which the landfill gas is mixed with a supply of air that is entrained into the mixer stage 908 via air inlet 910.

As with the embodiments of Figs 7 and 8, an intermediate heat exchanger 730 is provided, this time as the upper stage of the stack 900. Again, using heat transfer oil circulating through lines 734 and 736, the intermediate heat exchanger 730 thus provides the source of heat for the main heat exchanger 102 of the energy recovery system 100 discussed above in relation to Fig. 1 (a).

In flare stacks, the typical heat outputs are in the region of 5MW or so. Using the energy recovery system 100 via the intermediate heat transfer oil circuit, heat can be recovered from the exhaust of the stack. Electrical power generated by the energy recovery system 100 can be exported to the grid. Alternatively or additionally, the energy recovery system 100 is electrically coupled to the blower 903 to power it electrically. The effect of blowing increased air into the stack 900 (at the base stage 902) is to reduce emissions from the stack itself by lowering combustion temperatures; nitrogen oxide emissions can be reduced in this way. In addition, the increased time of dwell in the stack 900 due to the addition of the heat exchanger 730 gives more time for chemical reactions to occur, thereby also cutting harmful emissions from the stack.

Data suggests that the number of flare stacks in which these techniques may be employed is in the many hundreds in some countries and of the order of several thousand in others. It is also envisaged for a stack outputting a total of 1 MW, electrical energy of the order of 200-250kW may be recovered by the use of the aforementioned systems. This is particularly useful as many stacks are in remote, rural areas (landfills, oilfields), and it is particularly desirable that as much electrical energy as possible is generated on site

## Claims

1. An energy recovery system, for extracting energy from a source of waste heat, the system being a closed system with a circulating working fluid, comprising:
a first heat exchanger (102) for receiving source fluid, incorporating the waste heat, at a first temperature and outputting said waste fluid at a second temperature, and for receiving said working fluid at a third temperature and outputting the working fluid at a fourth temperature, said fourth temperature being higher than said third temperature and higher than the boiling point of the working fluid;
a turbine unit (114), arranged to receive the working fluid output from the first heat exchanger (102) at a first pressure and to output the working fluid at a second pressure, said second pressure being lower than the first pressure, the turbine unit (114) thereby imparting rotational energy to a turbine shaft (116) mounted on a bearing (422) within the turbine unit (114);
an electromechanical conversion unit (120), coupled to the turbine shaft (116), for converting said rotational energy into electrical energy; and
a cooling system, coupled to the turbine unit (114) and to the first heat exchanger (102), for receiving the working fluid from the turbine unit (114) at a fifth temperature, cooling the fluid, and supplying the fluid to the first heat exchanger (102) at said third temperature, wherein the cooling system includes:
a second heat exchanger (126), coupled to the turbine unit (114) and to the first heat exchanger (102), for receiving a first supply of working fluid from the turbine unit (114) at said fifth temperature and outputting working fluid from said first supply at a sixth temperature, said sixth temperature being lower than said fifth temperature, the second heat exchanger (126) being adapted to receive a second supply of working fluid in liquid form at a seventh temperature and output working fluid from the second supply of fluid to said first heat exchanger (102) at said third temperature;
a condensing unit (134), coupled to the second heat exchanger (126) and adapted to receive a supply of cooling fluid, for receiving the working fluid output by the second heat exchanger (126) at said sixth temperature and outputting working fluid in liquid form at said seventh temperature, said seventh temperature being lower than said sixth temperature and lower than the boiling point of the working fluid; and
a pump (144), coupled to the condensing unit (134), for receiving the liquid working fluid at said seventh temperature and pumping said liquid working fluid to said second heat exchanger (126), thereby providing said second supply of working fluid to the second heat exchanger (126); and
**characterised in that** a fluid pipe (160) is connected between an outlet for the pump (144), which provides said second supply of working fluid, and said bearing (422) thereby providing lubrication of said bearing (422) by a portion of the liquid working fluid separate from said second supply.

2. The system of claim 1, wherein said first temperature is 110 to 225°C.

3. The system of claim 1 or claim 2, wherein said second temperature is 80 to 140°C.

4. The system of any of claims 1 to 3, wherein said first temperature is about 180°C and said second temperature is about 123°C.

5. The system of any of the preceding claims, wherein said first pressure is 10 x 10⁵ to 30 x 10⁵ N/m² (10 to 30 bar) absolute.

6. The system of any of the preceding claims, wherein said second pressure is 0.5 x 10⁵ to 2 x 10⁵ N/m² (0.5 to 2 bar) absolute.

7. The system of any of the preceding claims, wherein the working fluid comprises a single component fluid selected from the alkanes.

8. The system of any of the preceding claims, wherein the working fluid comprises a fluid with a boiling point of from 30-110°C.

9. The system of any of the preceding claims, wherein the electromechanical conversion unit (120) includes an alternator (120) adapted to output electric current.

10. The system of claim 9, further comprising an electrical conditioning unit (152), coupled to said alternator (120), for altering the frequency of the current received from the alternator (120) and outputting current at mains frequency.

11. The system of any of the preceding claims, wherein the turbine unit (114) has at least one turbine stage (402,404) mounted on the turbine shaft (116), the or each turbine stage (402,404) incorporating a set of vanes (412,416).

12. The system claim 11, wherein the at least one turbine stage (402,404) is made of aluminium or steel.

13. The system claim 11, wherein the at least one turbine stage(402,404) is made of plastics material.

14. The system claim 13, wherein the plastics material is (a) polyetheretherketone (PEEK) containing carbon fibre, for example PEEK with 40% carbon fibre, (b) Ultern 2400, or (c)Valox 865.

15. The use of HFE-7100 or hexane or water as the working fluid in the energy conversion system of any of the preceding claims.

16. The use of one of the alkanes as the working fluid in the energy conversion system of any of the preceding claims.

17. An electrical energy generation system, comprising:
a microturbine system (700), the microturbine system (700) comprising
a combustion unit (702), coupled to a source of fuel, for combusting said fuel and outputting a first exhaust fluid,
a second turbine unit (710), coupled for receiving said first exhaust fluid whereby rotational energy is imparted, in use, to a second turbine shaft (712) of the second turbine unit (710), the second turbine unit (710) being adapted to a output second exhaust fluid,
an intermediate heat transfer unit (730), coupled for receiving said second exhaust fluid and adapted for performing a transfer of heat from the second exhaust fluid to an intermediate heat transfer fluid and to output the intermediate heat transfer fluid after said transfer of heat, and
an energy recovery system according to any of claims 1 to 14, the energy conversion system having said first heat exchanger (102) coupled for receiving said intermediate heat transfer fluid, the intermediate heat transfer fluid embodying said source fluid.

18. The electrical energy generation system of claim 17, wherein the microturbine system (700) further includes a compressor (716), coupled to the second turbine unit (710) and the combustion unit (702), and driven, in use, by the second turbine shaft (712), the compressor (716) receiving a supply of oxygen-containing fluid and supplying said oxygen-containing fluid in a compressed state, in use, to the combustion unit (702).

19. The electrical energy generation system of claim 17 or 18, wherein the microturbine system (700) further includes a generator (714), coupled to the second turbine unit (710) and driven, in use, by the second turbine shaft (712), the generator (714) being adapted to output electrical energy.

20. The electrical energy generation system of any of claims 17 to 19, further including a recuperator (722), disposed between the second turbine unit (710) and the intermediate heat transfer unit (730) and coupled for receiving said second exhaust fluid and outputting third exhaust fluid to the intermediate heat transfer unit (730), the recuperator (722) being further adapted for receiving a supply of oxygen-containing fluid, for example from the compressor (716) , and for conveying said oxygen-containing fluid to the combustor (702) after transfer of heat thereto from said second exhaust fluid.

21. The electrical energy generation system of claim 20, wherein the recuperator (722) comprises a third heat exchanger.

22. An electrical energy generation system, comprising:
an internal combustion system, the internal combustion system comprising
an internal combustion engine (802), coupled to a source of fuel, for combusting said fuel and outputting an engine exhaust fluid, the internal combustion engine (802) being arranged whereby rotational energy is imparted, in use, to an drive shaft (812),
an intermediate heat transfer unit (730), coupled for receiving said engine exhaust fluid and adapted for performing a transfer of heat from the engine exhaust fluid to an intermediate heat transfer fluid and to output the intermediate heat transfer fluid after said transfer of heat, and
an energy recovery system according to any of claims 1 to 14, the energy conversion system having said first heat exchanger (902) coupled for receiving said intermediate heat transfer fluid, the intermediate heat transfer fluid embodying said source fluid.

23. The electrical energy generation system of claim 22, wherein the internal combustion system further includes a generator (894), coupled to the internal combustion engine (802) and driven, in use, by the drive shaft (812), the generator (814) being adapted to output electrical energy.

24. The electrical energy generation system of claim 22 or 23, wherein the internal combustion engine (802) is coupled to a supply of fuel and to a supply of oxygen-containing fluid.

25. An electrical energy generation system, comprising:
a waste gas disposal stack (900), the waste gas disposal stack (900) including
a base stage (902), the base stage (902) including a blower (903) for blowing oxygen-containing gas into the waste gas disposal stack (900),
a combustion stage (904), adjacent the base stage, coupled to a source of waste gas, the waste gas being or including a combustible gas, the combustion stage (904) being adapted to combust, in use, said waste gas in said oxygen-containing gas,
a mixer stage (908), adjacent said combustion stage (904), adapted to generate a mixture of gases comprising air mixed with the combustor exhaust gases resulting from said combustion stage (904),
an intermediate heat transfer unit (730), coupled for receiving said mixture of gases and adapted for performing a transfer of heat from the mixture of gases to an intermediate heat transfer fluid and to output the intermediate heat transfer fluid after said transfer of heat, and
an energy recovery system according to any of claims 1 to 14, the energy conversion system having said first heat exchanger (102) coupled for receiving said intermediate heat transfer fluid, the intermediate heat transfer fluid embodying said source fluid.

26. The electrical energy generation system of claim 25, wherein the blower (903) comprises an electrically-powered blower, the blower (903) is electrically coupled to the electromechanical conversion unit (120), and at least part of the electrical energy generated, in use, by the energy conversion system powers the blower (903).

27. The electrical energy generation system of any of claims 17 to 26, wherein the intermediate heat transfer unit (730) comprises a heat exchanger, and/or the intermediate heat transfer fluid comprises heat transfer oil.

28. A method carried out in a an energy recovery system of any one of claims 1 to 14, wherein the electromechanical conversion unit (120) includes an alternator, and the system further comprises a control system coupled to the alternator (120) and adapted to vary the voltage derived from the alternator, the method comprising the steps of:
(a) increasing the voltage by one voltage step;
(b) measuring the output power of the alternator (120);
(c) if the output power measured in step (b) is less than or equal to the previous output power,
(i) decreasing the voltage by one voltage step
(ii) repeating the steps of
(1) decreasing the voltage by one voltage step
(2) measuring the output power of the alternator (120): while the output power measured in step (c)(ii (2) is more than the previously measured output power, and
if the output power measured in step (b) is more than the previous output power, repeating the steps of
(iii) increasing the voltage by one voltage step
(iv) measuring the output power of the alternator (120) while the output power measured in step (c) (iv) is more than the previously measured output power.

29. The method of claim 28, wherein each step of increasing the voltage by one voltage step is replaced by the step of decreasing the voltage by one voltage step, and vice versa.

30. The method of claim 28 or claim 29, wherein the voltage step is about 1% to 2.5 % of the mean voltage.

31. The method of any one of claims 28 to 30, wherein step (a) is performed about every second.

32. The method of any one of claims 28 to 31, wherein the step of measuring the output power of the alternator (120) comprises measuring an output voltage V derived from the output of the alternator (120), measuring the output current I derived from the output of the alternator (120), and computing output power = V*I.

33. The method of any of claims 28 to 32, wherein the step of measuring the output power of the alternator (120) comprises measuring the output power with a separate power-measuring device.

34. The method of any of claims 28 to 33, further comprising converting the alternator (120) voltage from a first frequency to a second frequency.

35. The method of claim 34, wherein the first frequency is higher than the second frequency, and the second frequency is about the frequency of a mains supply.

36. The method of claim 34 or 35, wherein said step of converting the voltage comprises: rectifying the voltage output by the alternator (120) using a rectification circuit (166) thereby deriving a DC voltage, and generating an AC voltage from said DC voltage using a power-conditioning unit (152).

37. The method of any of claims 28 to 36 further comprising storing the last-measured value of the output power.

38. A programmable control system when suitably programmed for carrying out the method of any of claims 28 to 37, the system including a processor, a memory, an interface coupled to the electromechanical conversion unit, and a user interface.

39. The control system of claim 38, including a frequency conversion device for altering the frequency of an a. c. voltage.

## Patentansprüche

1. Ein Energierückgewinnungssystem für die Extraktion von Energie aus einer Abwärmequelle, wobei das System ein geschlossenes System mit einem zirkulierenden Arbeitsfluid ist, mit:
einem ersten Wärmetauscher (102) zur Aufnahme von Quellenfluid, das die Abwärme aufweist, bei einer ersten Temperatur und zur Ausgabe des Abfallfluides bei einer zweiten Temperatur sowie zur Aufnahme des Arbeitsfluides bei einer dritten Temperatur und zur Abgabe des Arbeitsfluides bei einer vierten Temperatur, wobei die vierte Temperatur höher ist als die dritte Temperatur und höher als der Siedepunkt des Arbeitsfluides;
einer Turbineneinheit (114), die so angeordnet ist, dass sie das von dem ersten Wärmetauscher (102) mit einem ersten Druck ausgegebene Arbeitsfluid aufnimmt und das Arbeitsfluid mit einem zweiten Druck ausgibt, wobei der zweite Druck niedriger ist als der erste Druck, wodurch die Turbineneinheit (114) eine Rotationsenergie auf eine Turbinenwelle (116) überträgt, die an einem Lager (422) in der Turbineneinheit (114) angebracht ist;
einer elektromechanischen Umwandlungseinheit (120), die mit der Turbinenwelle (116) gekoppelt ist, um die Rotationsenergie in elektrische Energie umzuwandeln; und
einem Kühlsystem, das mit der Turbineneinheit (114) und dem ersten Wärmetauscher (102) gekoppelt ist, um das Arbeitsfluid von der Turbineneinheit (114) bei einer fünften Temperatur aufzunehmen, das Fluid zu kühlen und das Fluid dem ersten Wärmetauscher (102) mit der dritten Temperatur zuzuführen, wobei das Kühlsystem folgende Elemente aufweist:
einen zweiten Wärmetauscher (126), der mit der Turbineneinheit (114) und dem ersten Wärmtauscher (102) gekoppelt ist, um eine erste Zufuhr des Arbeitsfluides von der Turbineneinheit (114) bei einer fünften Temperatur aufzunehmen und das Arbeitsfluid von der ersten Zufuhr bei einer sechsten Temperatur auszugeben, wobei die sechste Temperatur niedriger ist die fünfte Temperatur, wobei der zweite Wärmetauscher (126) dazu ausgestaltet ist, eine zweite Zufuhr von Arbeitsfluid in flüssiger Form bei einer siebten Temperatur aufzunehmen und das Arbeitsfluid von der zweiten Zufuhr des Fluides bei der dritten Temperatur zu dem ersten Wärmetauscher (102) auszugeben;
einer Kondensationseinheit (134), die mit dem zweiten Wärmetauscher (126) gekoppelt und dazu ausgestaltet ist, eine Zufuhr von Kühlfluid aufzunehmen, um das Arbeitsfluid, das von dem zweiten Wärmetauscher (126) bei der sechsten Temperatur ausgegeben wird, aufzunehmen und das Arbeitsfluid in flüssiger Form bei der siebten Temperatur auszugeben, wobei die siebte Temperatur niedriger ist als die sechste Temperatur und niedriger als der Siedepunkt des Arbeitsfluides; und
einer Pumpe (144), die mit der Kondensationseinheit (134) gekoppelt ist, um das flüssige Arbeitsfluid bei der siebten Temperatur aufzunehmen und das flüssige Arbeitsfluid zu dem zweiten Wärmetauscher (126) zu pumpen, wodurch die zweite Zufuhr des Arbeitsfluides zu dem zweiten Wärmetauscher (126) geschaffen wird; und
**dadurch gekennzeichnet, dass** eine Fluidleitung (160) zwischen einem Auslass für die Pumpe (144), die die zweite Zufuhr des Arbeitsfluides liefert, und dem Lager (422) angeschlossen ist, wodurch eine Schmierung des Lagers (422) durch einen Teil des flüssigen Arbeitsfluides erreicht wird, das von der zweiten Zufuhr getrennt ist.

2. Das System nach Anspruch 1, wobei die erste Temperatur 110 bis 225 °C beträgt.

3. Das System nach Anspruch 1 oder Anspruch 2, wobei die zweite Temperatur 80 bis 140 °C beträgt.

4. Das System nach einem der Ansprüche 1 bis 3, wobei die erste Temperatur etwa 180 °C und die zweite Temperatur etwa 123 °C beträgt.

5. Das System nach einem der vorhergehenden Ansprüche, wobei der erste Druck 10 x 10⁵ bis 30 x 10⁵ N/m² (10 bis 30 bar) absolut beträgt.

6. Das System nach einem der vorhergehenden Ansprüche, wobei der zweite Druck 0,5 x 10⁵ bis 2 x 10⁵ N/m² (0,5 bis 2 bar absolut) beträgt.

7. Das System nach einem der vorhergehenden Ansprüche, wobei das Arbeitsfluid ein Fluid mit einer einzelnen Komponente ist, die aus den Alkanen ausgewählt ist.

8. Das System nach einem der vorhergehenden Ansprüche, wobei das Arbeitsfluid ein Fluid mit einem Siedepunkt von 30 bis 110 °C aufweist.

9. Das System nach einem der vorhergehenden Ansprüche, wobei die elektromechanische Umwandlungseinheit (120) einen Generator (120) aufweist, der dazu ausgestaltet ist, elektrischen Strom auszugeben.

10. Das System nach Anspruch 9, außerdem mit einer elektrischen Konditionierungseinheit (152), die mit dem Generator (120) gekoppelt ist, um die Frequenz des von dem Generator (120) empfangenen Stromes zu ändern und Strom mit Netzfrequenz auszugeben.

11. Das System nach einem der vorhergehenden Ansprüche, wobei die Turbineneinheit (114) wenigstens eine Turbinenstufe (402, 404) aufweist, die an der Turbinenwelle (116) angebracht ist, wobei die oder jede Turbinenstufe (402, 404) eine Gruppe von Leitschaufeln (412, 416) aufweist.

12. Das System nach Anspruch 11, wobei die oder wenigstens eine Turbinenstufe (402, 404) aus Aluminium oder Stahl hergestellt ist.

13. Das System nach Anspruch 11, wobei die oder wenigstens eine Turbinenstufe (402, 404) aus Kunststoffmaterial hergestellt ist.

14. Das System nach Anspruch 13, wobei das Kunststoffmaterial (a) Polyetheretherketon (PEEK) mit Kohlenstofffasern, bspw. PEEK mit 40 % Kohlenstofffasern, (b) Ultern 2400 oder (c) Valox 865 ist.

15. Die Verwendung von HFE-7100 oder Hexan oder Wasser als das Arbeitsfluid in dem Energieumwandlungssystem nach einem der vorhergehenden Ansprüche.

16. Die Verwendung eines der Alkane des Arbeitsfluides in dem Energieumwandlungssystem nach einem der vorhergehenden Ansprüche.

17. Ein System zur Erzeugung elektrischer Energie mit:
einem Mikroturbinensystem (700), wobei das Mirkoturbinensystem (700) folgende Elemente umfasst:
eine Verbrennungseinheit (702), die mit einer Brennstoffquelle gekoppelt ist, um den Brennstoff zu verbrennen und ein erstes Abgasfluid auszugeben,
eine zweite Turbineneinheit (710), die zur Aufnahme des ersten Abgasfluides angeschlossen ist, wodurch bei der Verwendung die Rotationsenergie an eine zweite Turbinenwelle (712) der zweiten Turbineneinheit (710) weitergegeben wird, wobei die zweite Turbineneinheit (710) dazu ausgestaltet ist, ein zweites Abgasfluid auszugeben,
einer Zwischenwärmeübertragungseinheit (730), die zur Aufnahme des zweiten Abgasfluides angeschlossen und dazu ausgestaltet ist, eine Wärmeübertragung von dem zweiten Abgasfluid zu einem Zwischenwärmeübertragungsfluid durchzuführen und das Zwischenwärmeübertragungsfluid nach der Wärmeübertragung auszugeben und
einem Energierückgewinnungssystem nach einem der Ansprüche 1 bis 14, wobei das Energieumwandlungssystem den ersten Wärmetauscher (102) aufweist, der zur Aufnahme des Zwischenwärmeübertragungsfluides angeschlossen ist, wobei das Zwischenwärmeübertragungsfluid das Quellenfluid bildet.

18. Das System zur Erzeugung elektrischer Energie nach Anspruch 17, wobei das Mikroturbinensystem (700) außerdem einen Kompressor (712) aufweist, der mit der zweiten Turbineneinheit (710) und der Verbrennungseinheit (702) verbunden ist und bei der Verwendung durch die zweite Turbinenwelle (712) angetrieben wird, wobei der Kompressor (716) eine Zufuhr von Sauerstoff enthaltendem Fluid aufnimmt und das Sauerstoff enthaltende Fluid bei der Verwendung in einem komprimierten Zustand der Verbrennungseinheit (702) zuführt.

19. Das System zur Erzeugung elektrischer Energie nach Anspruch 17 oder 18, wobei das Mikroturbinensystem (700) außerdem einen Generator (706) aufweist, welcher mit der zweiten Turbineneinheit (710) gekoppelt ist und bei der Verwendung durch die zweite Turbinenwelle (712) angetrieben wird, wobei der Generator (714) dazu ausgestaltet ist, elektrische Energie auszugeben.

20. Das System zur Erzeugung elektrischer Energie nach einem der Ansprüche 17 bis 19, außerdem mit einem Rekuperator (722), der zwischen der zweiten Turbineneinheit (710) und der Zwischenwärmeübertragungseinheit (730) angeordnet und angeschlossen ist, um das zweite Abgasfluid aufzunehmen und drittes Abgasfluid zu der Zwischenwärmeübertragungseinheit (730) auszugeben, wobei der Rekuperator (722) außerdem dazu ausgestaltet ist, eine Zufuhr von Sauerstoff enthaltendem Fluid bspw. von dem Kompressor (716) aufzunehmen und um das Sauerstoff enthaltende Fluid zu der Brennkammer (702) zu fördern, nachdem Wärme von dem zweiten Abgasfluid hierauf übertragen wurde.

21. Das System zur Erzeugung elektrischer Energie nach Anspruch 20, wobei der Rekuperator (722) einen dritten Wärmetauscher aufweist.

22. Ein System zur Erzeugung elektrischer Energie mit:
einem System mit innerer Verbrennung, wobei das System mit innerer Verbrennung folgende Elemente aufweist:
eine Verbrennungskraftmaschine (802), die mit einer Brennstoffquelle verbunden ist, um den Brennstoff zu verbrennen und ein Motorabgasfluid auszugeben, wobei die Verbrennungskraftmaschine (802) so angeordnet ist, dass bei der Verwendung Rotationsenergie auf eine Antriebswelle (812) übertragen wird,
eine Zwischenwärmeübertragungseinheit (730), die zur Aufnahme des Motorabgasfluides angeschlossen und dazu ausgestaltet ist, eine Wärmeübertragung von dem Motorabgasfluid zu einem Zwischenwärmeübertragungsfluid durchzuführen und das Zwischenwärmeübertragungsfluid nach der Wärmeübertragung auszugeben, und
einem Energierückgewinnungssystem nach einem der Ansprüche 1 bis 14, wobei das Energieumwandlungssystem den ersten Wärmetauscher (102) aufweist, der zur Aufnahme des Zwischenwärmeübertragungsfluides angeschlossen ist, wobei das Zwischenwärmeübertragungsfluid das Quellenfluid bildet.

23. Das System zur Erzeugung elektrischer Energie nach Anspruch 22, wobei das System mit innerer Verbrennung außerdem einen Generator (814) aufweist, der mit der Verbrennungskraftmaschine (802) gekoppelt ist und bei der Verwendung durch die Antriebswelle (812) angetrieben wird, wobei der Generator (814) dazu ausgestaltet ist, elektrische Energie auszugeben.

24. Das System zur Erzeugung elektrischer Energie nach Anspruch 22 oder 23, wobei die Verbrennungskraftmaschine (802) mit einer Brennstoffzufuhr und einer Zufuhr von Sauerstoff enthaltendem Fluid verbunden ist.

25. Ein System zur Erzeugung elektrischer Energie mit:
einem Abgasabfuhrkamin (900), wobei der Abgasabfuhrkamin (900) folgende Elemente aufweist:
eine Basisstufe (902), wobei die Basisstufe (902) ein Gebläse (903) zum Blasen von Sauerstoff enthaltendem Gas in den Abgasabfuhrkamin (900) aufweist,
eine Verbrennungsstufe (904) angrenzend an die Basisstufe, die mit einer Abgasquelle gekoppelt ist, wobei das Abgas ein brennbares Gas ist oder aufweist, wobei die Verbrennungsstufe (904) dazu ausgestaltet ist, bei der Verwendung das Abgas in dem Sauerstoff enthaltenden Gas zu verbrennen,
eine Mischstufe (908) angrenzend an die Brennstufe (904), die dazu ausgestaltet ist, eine Mischung von Gasen zu erzeugen, die Luft gemischt mit den aus der Brennstufe (904) hervorgehenden Brennkammerabgasen aufweist,
einer Zwischenwärmeübertragungseinheit (730), die zur Aufnahme der Gasmischung angeschlossen und dazu ausgestaltet ist, eine Wärmeübertragung von der Gasmischung auf ein Zwischenwärmeübertragungsfluid durchzuführen und das Zwischenwärmeübertragungsfluid nach der Wärmeübertragung auszugeben, und
einem Wärmerückgewinnungssystem nach einem der Ansprüche 1 bis 14, wobei das Wärmeumwandlungssystem den ersten Wärmetauscher (102) aufweist, der zur Aufnahme des Zwischenwärmeübertragungsfluides angeschlossen ist, wobei das Zwischenwärmeübertragungsfluid das Quellenfluid bildet.

26. Das System zur Erzeugung elektrischer Energie nach Anspruch 25, wobei das Gebläse (903) ein elektrisch angetriebenes Gebläse aufweist, wobei das Gebläse (903) elektrisch an die elektromechanische Umwandlungseinheit (120) angeschlossen ist und wobei bei der Verwendung wenigstens ein Teil der durch das Energieumwandlungssystem erzeugten elektrischen Energie das Gebläse (903) antreibt.

27. Das System zur Erzeugung elektrischer Energie nach einem der Ansprüche 17 bis 26, wobei die Zwischenwärmeübertragungseinheit (730) einen Wärmetauscher aufweist und/oder wobei das Zwischenwärmeübertragungsfluid ein Wärmeübertragungsöl aufweist.

28. Ein Verfahren, das in einem Energierückgewinnungssystem nach einem der Ansprüche 1 bis 14 ausgeübt wird, wobei die elektromechanische Umwandlungseinheit (120) einen Generator aufweist und das System außerdem ein Steuersystem aufweist, das mit dem Generator (120) gekoppelt und dazu ausgestaltet ist, die von dem Generator abgenommene Spannung zu variieren, wobei das Verfahren folgende Schritte aufweist:
(a) Erhöhen der Spannung um einen Spannungsschritt;
(b) Messen der Ausgangsleistung des Generators (120);
(c) wenn die in Schritt (b) gemessene Ausgangsleistung geringer oder gleich der vorhergehenden Ausgangsleistung ist,
(i) Verringern der Spannung um einen Spannungsschritt;
(ii) Wiederholen der Schritte;
(1) Verringern der Spannung um einen Spannungsschritt;
(2) Messen der Ausgangsleistung des Generators; während die in Schritt (c) (ii) (2) gemessene Ausgangsleistung größer ist als die zuvor gemessene Ausgangsleistung, und
wenn die in Schritt (b) gemessene Ausgangsleistung größer ist als die vorherige Ausgangsleistung, wiederholen der Schritte
(iii) Erhöhen der Spannung um einen Spannungsschritt
(iv) Messen der Ausgangsleistung des Generators (120), während die Ausgangsleistung, die in Schritt (c) (iv) gemessen wurde, größer ist als die zuvor gemessene Ausgangsleistung.

29. Das Verfahren nach Anspruch 28, wobei jeder Schritt der Erhöhung der Spannung um einen Spannungsschritt durch den Schritt der Verringerung der Spannung um einen Spannungsschritt ersetzt wird und umgekehrt.

30. Das Verfahren nach Anspruch 28 oder Anspruch 29, wobei der Spannungsschritt etwa 1 % bis 2,5 % der mittleren Spannung beträgt.

31. Das Verfahren nach einem der Ansprüche 28 bis 30, wobei der Schritt (a) etwa jede Sekunde durchgeführt wird.

32. Das Verfahren nach einem der Ansprüche 28 bis 31, wobei der Schritt des Messens der Ausgangsleistung des Generators (120) das Messen einer Ausgangsspannung V, die von dem Ausgang des Generators (120) abgeleitet wird, das Messen des Ausgangsstromes I, der von dem Ausgang des Generators (120) abgeleitet wird und das Berechnen der Ausgangsleistung = V * I umfasst.

33. Das Verfahren nach einem der Ansprüche 28 bis 32, wobei der Schritt des Messens der Ausgangsleistung des Generators (120) das Messen der Ausgangsleistung mit einer separaten Leistungsmesseinrichtung aufweist.

34. Das Verfahren nach einem der Ansprüche 28 bis 33, außerdem umfassend das Umwandeln der Spannung des Generators (120) von einer ersten Frequenz zu einer zweiten Frequenz.

35. Das Verfahren nach Anspruch 34, wobei die erste Frequenz höher ist als die zweite Frequenz, und wobei die zweite Frequenz etwa die Frequenz einer Netzversorgung ist.

36. Das Verfahren nach Anspruch 34 oder 35, wobei der Schritt der Umwandlung der Spannung folgendes umfasst: Gleichrichten des Spannungsausgangs durch den Generator (120) mit Hilfe eines Gleichrichterschaltkreises (122), wodurch eine Gleichspannung erhalten wird, und Erzeugen einer Wechselspannung aus der Gleichspannung mit Hilfe einer Leistungskonditioniereinheit (152).

37. Das Verfahren nach einem der Ansprüche 28 bis 36, außerdem umfassend das Speichern des zuletzt gemessenen Wertes der Ausgangsleistung.

38. Ein programmierbares Steuersystem, wenn es in geeigneter Weise programmiert ist, um das Verfahren nach einem der Ansprüche 28 bis 37 auszuführen, wobei das System einen Prozessor, eine Speichereinheit, eine Schnittstelle, die mit der elektromechanischen Umwandlungseinheit gekoppelt ist, und eine Benutzerschnittstelle aufweist.

39. Das Steuersystem nach Anspruch 38, umfassend eine Frequenzumwandlungseinrichtung zur Veränderung der Frequenz einer Wechselspannung.

## Revendications

1. Système de récupération d'énergie, pour extraire de l'énergie d'une source de chaleur d'échappement, le système étant un système fermé avec un fluide de travail de circulation, comprenant :
un premier échangeur de chaleur (102) pour recevoir le fluide source, incorporant la chaleur d'échappement, à une première température et délivrer en sortie ledit fluide d'échappement à une deuxième température, et pour recevoir ledit fluide de travail à une troisième température et délivrer en sortie le fluide de travail à une quatrième température, ladite quatrième température étant supérieure à ladite troisième température et supérieure au point d'ébullition du fluide de travail ;
un turbogroupe (114) agencé pour recevoir le fluide de travail sorti du premier échangeur de chaleur (102) à une première pression et pour délivrer en sortie le fluide de travail à une seconde pression, ladite seconde pression étant inférieure à la première pression, le turbogroupe (114) communiquant ainsi une énergie de rotation à un arbre de turbine (116) monté sur un palier (422) dans le turbogroupe (114) ;
une unité de conversion électromécanique (120), couplée à l'arbre de turbine (116) pour convertir ladite énergie de rotation en une énergie électrique ; et
un système de refroidissement, couplé au turbogroupe (114) et au premier échangeur de chaleur (102), pour recevoir le fluide de travail provenant du turbogroupe (114) à une cinquième température, refroidir le fluide, et délivrer le fluide au premier échangeur de chaleur (102) à ladite troisième température, dans lequel le système de refroidissement comprend :
un deuxième échangeur de chaleur (126), couplé au turbogroupe (114) et au premier échangeur de chaleur (102), pour recevoir une première alimentation du fluide de travail du turbogroupe (114) à ladite cinquième température et délivrer en sortie le fluide de travail de ladite première alimentation à une sixième température, ladite sixième température étant inférieure à ladite cinquième température, le deuxième échangeur de chaleur (126) étant adapté pour recevoir une seconde alimentation de fluide de travail sous forme liquide à une septième température et délivrer en sortie le fluide de travail de la seconde alimentation de fluide audit premier échangeur de chaleur (102) à ladite troisième température ;
un groupe condenseur (134), couplé au deuxième échangeur de chaleur (126) et adapté pour recevoir une alimentation de fluide de refroidissement, pour recevoir le fluide de travail sorti par le deuxième échangeur de chaleur (126) à ladite sixième température et délivrer en sortie le fluide de travail sous forme liquide à ladite septième température, ladite septième température étant inférieure à ladite sixième température et inférieure au point d'ébullition du fluide de travail ; et
une pompe (144), couplée au groupe condenseur (134), pour recevoir le fluide de travail liquide à ladite septième température et pomper ledit fluide de travail liquide audit deuxième échangeur de chaleur (126), délivrant ainsi ladite seconde alimentation de fluide de travail au deuxième échangeur de chaleur (126) ; et
**caractérisé en ce qu'**un tuyau de fluide (160) est relié entre une sortie pour la pompe (144), qui délivre ladite seconde alimentation de fluide de travail, et ledit palier (422) fournissant ainsi une lubrification dudit palier (422) par une portion du fluide de travail liquide séparée de ladite seconde alimentation.

2. Système selon la revendication 1, dans lequel ladite première température est de 110 à 225°C.

3. Système selon la revendication 1 ou la revendication 2, dans lequel ladite deuxième température est de 80 à 140°C.

4. Système selon l'une quelconque des revendications 1 à 3, dans lequel ladite première température est d'environ 180°C et ladite deuxième température est d'environ 123°C.

5. Système selon l'une quelconque des revendications précédentes, dans lequel ladite première pression est de 10 x 10⁵ à 30 x 10⁵ N/m² (10 à 30 bar) en valeur absolue.

6. Système selon l'une quelconque des revendications précédentes, dans lequel ladite seconde pression est de 0,5 x 10⁵ à 2 x 10⁵ N/m² (0,5 à 2 bar) en valeur absolue.

7. Système selon l'une quelconque des revendications précédentes, dans lequel le fluide de travail comprend un fluide à composant unique choisi parmi les alcanes.

8. Système selon l'une quelconque des revendications précédentes, dans lequel le fluide de travail comprend un fluide ayant un point d'ébullition de 30 à 110°C.

9. Système selon l'une quelconque des revendications précédentes, dans lequel l'unité de conversion électromécanique (120) comprend un alternateur (120) adapté pour délivrer en sortie un courant électrique.

10. Système selon la revendication 9, comprenant en outre une unité de conditionnement électrique (152), couplée audit alternateur (120), pour modifier la fréquence du courant reçu de l'alternateur (120) et délivrer en sortie un courant à une fréquence de réseau.

11. Système selon l'une quelconque des revendications précédentes, dans lequel le turbogroupe (114) a au moins un étage de turbine (402, 404) monté sur l'arbre de turbine (116), l'étage ou chaque étage de turbine (402, 404) incorporant un ensemble d'aubes (412, 416).

12. Système selon la revendication 11, dans lequel le au moins un étage de turbine (402, 404) est constitué d'aluminium ou d'acier.

13. Système selon la revendication 11, dans lequel le au moins un étage de turbine (402, 404) est constitué de matière plastique.

14. Système selon la revendication 13, dans lequel la matière plastique est (a) une poly-(étheréthercétone) (PEEK) contenant une fibre de carbone, par exemple PEEK avec 40 % de fibre de carbone, (b) Ultem 2400, ou (c) Valox 865.

15. Utilisation de HFE-7100 ou d'hexane ou d'eau en tant que fluide de travail dans le système de conversion d'énergie selon l'une quelconque des revendications précédentes.

16. Utilisation de l'un des alcanes en tant que fluide de travail dans le système de conversion d'énergie selon l'une quelconque des revendications précédentes.

17. Système de génération d'énergie électrique, comprenant :
un système de microturbine (700), le système de microturbine (700) comprenant
une unité de combustion (702) couplée à une source de combustible, pour réaliser une combustion dudit combustible et délivrer en sortie un premier fluide d'échappement,
un second turbogroupe (710) couplé pour recevoir ledit premier fluide d'échappement moyennant quoi une énergie de rotation est communiquée, en utilisation, à un second arbre de turbine (712) du second turbogroupe (710), le second turbogroupe (710) étant adapté à un deuxième fluide d'échappement sorti,
une unité de transfert de chaleur intermédiaire (730), couplée pour recevoir ledit deuxième fluide d'échappement et adaptée pour effectuer un transfert de chaleur du deuxième fluide d'échappement à un fluide de transfert de chaleur intermédiaire et délivrer en sortie le fluide de transfert de chaleur intermédiaire après ledit transfert de chaleur, et
un système de récupération d'énergie selon l'une quelconque des revendications 1 à 14, le système de conversion d'énergie ayant ledit premier échangeur de chaleur (102) couplé pour recevoir ledit fluide de transfert de chaleur intermédiaire, le fluide de transfert de chaleur intermédiaire incarnant ledit fluide source.

18. Système de génération d'énergie électrique selon la revendication 17, dans lequel le système de microturbine (700) comprend en outre un compresseur (716), couplé au second turbogroupe (710) et à l'unité de combustion (702), et entraîné, en utilisation, par le second arbre de turbine (712), le compresseur (716) recevant une alimentation de fluide contenant de l'oxygène et délivrant ledit fluide contenant de l'oxygène dans un état comprimé, en utilisation, à l'unité de combustion (702).

19. Système de génération d'énergie électrique selon la revendication 17 ou 18, dans lequel le système de microturbine (700) comprend en outre un générateur (714), couplé au second turbogroupe (710) et entraîné, en utilisation, par le second arbre de turbine (712), le générateur (714) étant adapté pour délivrer en sortie une énergie électrique.

20. Système de génération d'énergie électrique selon l'une quelconque des revendications 17 à 19, comprenant en outre un récupérateur (722), disposé entre le second turbogroupe (710) et l'unité de transfert de chaleur intermédiaire (730) et couplé pour recevoir ledit deuxième fluide d'échappement et délivrer en sortie un troisième fluide d'échappement à l'unité de transfert de chaleur intermédiaire (730), le récupérateur (722) étant en outre adapté pour recevoir une alimentation de fluide contenant de l'oxygène, par exemple du compresseur (716), et pour acheminer ledit fluide contenant de l'oxygène à la chambre de combustion (702) après transfert de chaleur à celle-ci dudit deuxième fluide d'échappement.

21. Système de génération d'énergie électrique selon la revendication 20, dans lequel le récupérateur (722) comprend un troisième échangeur de chaleur.

22. Système de génération d'énergie électrique, comprenant :
un système de combustion interne, le système de combustion interne comprenant
un moteur à combustion interne (802), couplé à une source de combustible, pour réaliser une combustion dudit combustible et délivrer en sortie un fluide d'échappement de moteur, le moteur à combustion interne (802) étant agencé moyennant quoi une énergie de rotation est communiquée, en utilisation, à un arbre d'entraînement (812),
une unité de transfert de chaleur intermédiaire (730), couplée pour recevoir ledit fluide d'échappement de moteur et adaptée pour réaliser un transfert de chaleur du fluide d'échappement de moteur à un fluide de transfert de chaleur intermédiaire et délivrer en sortie le fluide de transfert de chaleur intermédiaire après ledit transfert de chaleur, et
un système de récupération d'énergie selon l'une quelconque des revendications 1 à 14, le système de conversion d'énergie ayant ledit premier échangeur de chaleur (102) couplé pour recevoir ledit fluide de transfert de chaleur intermédiaire, le fluide de transfert de chaleur intermédiaire incarnant ledit fluide source.

23. Système de génération d'énergie électrique selon la revendication 22, dans lequel le système de combustion interne comprend en outre un générateur (814), couplé au moteur à combustion interne (802) et entraîné, en utilisation, par l'arbre d'entraînement (812), le générateur (814) étant adapté pour délivrer en sortie une énergie électrique.

24. Système de génération d'énergie électrique selon la revendication 22 ou 23, dans lequel le moteur à combustion interne (802) est couplé à une alimentation de combustible et à une alimentation de fluide contenant de l'oxygène.

25. Système de génération d'énergie électrique, comprenant :
un bloc d'élimination de gaz d'échappement (900), le bloc d'élimination de gaz d'échappement (900) comprenant
un étage de base (902), l'étage de base (902) comprenant une soufflante (903) pour souffler un gaz contenant de l'oxygène dans le bloc d'élimination de gaz d'échappement (900),
un étage de combustion (904), adjacent à l'étage de base, couplé à une source de gaz d'échappement, le gaz d'échappement étant ou comprenant un gaz combustible, l'étage de combustion (904) étant adapté pour réaliser une combustion, en utilisation, dudit gaz d'échappement dans ledit gaz contenant de l'oxygène,
un étage mélangeur (908), adjacent audit étage de combustion (904), adapté pour générer un mélange de gaz comprenant de l'air mélangé avec les gaz d'échappement de la chambre de combustion provenant dudit étage de combustion (904),
une unité de transfert de chaleur intermédiaire (730), couplée pour recevoir ledit mélange de gaz et adaptée pour effectuer un transfert de chaleur du mélange de gaz à un fluide de transfert de chaleur intermédiaire et délivrer en sortie le fluide de transfert de chaleur intermédiaire après ledit transfert de chaleur, et
un système de récupération d'énergie selon l'une quelconque des revendications 1 à 14, le système de conversion d'énergie ayant ledit premier échangeur de chaleur (102) couplé pour recevoir ledit fluide de transfert de chaleur intermédiaire, le fluide de transfert de chaleur intermédiaire incarnant ledit fluide source.

26. Système de génération d'énergie électrique selon la revendication 25, dans lequel la soufflante (903) comprend une soufflante alimentée électriquement, la soufflante (903) est électriquement couplée à l'unité de conversion électromécanique (120), et au moins une partie de l'énergie électrique générée, en utilisation, par le système de conversion d'énergie alimente la soufflante (903).

27. Système de génération d'énergie électrique selon l'une quelconque des revendications 17 à 26, dans lequel l'unité de transfert de chaleur intermédiaire (730) comprend un échangeur de chaleur, et/ou le fluide de transfert de chaleur intermédiaire comprend une huile de transfert de chaleur.

28. Méthode réalisée dans un système de récupération d'énergie selon l'une quelconque des revendications 1 à 14, dans laquelle l'unité de conversion électromécanique (120) comprend un alternateur, et le système comprend en outre un système de commande couplé à l'alternateur (120) et adapté pour faire varier la tension dérivée de l'alternateur, la méthode comprenant les étapes consistant à :
(a) augmenter la tension d'un échelon de tension ;
(b) mesurer la puissance de sortie de l'alternateur (120) ;
(c) si la puissance de sortie mesurée à l'étape (b) est inférieure ou égale à la puissance de sortie précédente,
(i) diminuer la tension d'un échelon de tension
(ii) répéter les étapes consistant à
(1) diminuer la tension d'un échelon de tension
(2) mesurer la puissance de sortie de l'alternateur (120) ; tandis que la puissance de sortie mesurée à l'étape (c)(ii (2)) est supérieure à la puissance de sortie précédemment mesurée, et
si la puissance de sortie mesurée à l'étape (b) est supérieure à la puissance de sortie précédente, répéter les étapes consistant à
(iii) augmenter la tension d'un échelon de tension
(iv) mesurer la puissance de sortie de l'alternateur (120) tandis que la puissance de sortie mesurée à l'étape (c)(iv) est supérieure à la puissance de sortie précédemment mesurée.

29. Méthode selon la revendication 28, dans laquelle chaque étape d'augmentation de la tension d'un échelon de tension est remplacée par l'étape de diminution de la tension d'un échelon de tension, et vice versa.

30. Méthode selon la revendication 28 ou la revendication 29, dans laquelle l'échelon de tension représente environ 1 % à 2,5 % de la tension moyenne.

31. Méthode selon l'une quelconque des revendications 28 à 30, dans laquelle l'étape (a) est réalisée environ toutes les secondes.

32. Méthode selon l'une quelconque des revendications 28 à 31, dans laquelle l'étape consistant à mesurer la puissance de sortie de l'alternateur (120) comprend la mesure d'une tension de sortie V dérivée de la sortie de l'alternateur (120), la mesure du courant de sortie I dérivé de la sortie de l'alternateur (120), et le calcul de la puissance de sortie = V*I.

33. Méthode selon l'une quelconque des revendications 28 à 32, dans laquelle l'étape consistant à mesurer la puissance de sortie de l'alternateur (120) comprend la mesure de la puissance de sortie avec un dispositif de mesure de puissance séparé.

34. Méthode selon l'une quelconque des revendications 28 à 33, comprenant en outre la conversion de la tension de l'alternateur (120) d'une première fréquence en une seconde fréquence.

35. Méthode selon la revendication 34, dans laquelle la première fréquence est supérieure à la seconde fréquence, et la seconde fréquence représente environ la fréquence d'une alimentation secteur.

36. Méthode selon la revendication 34 ou 35, dans laquelle ladite étape de conversion de la tension comprend les sous-étapes consistant à :
rectifier la tension sortie par l'alternateur (120) en utilisant un circuit de rectification (166) dérivant ainsi une tension de courant continu, et générer une tension de courant alternatif à partir de ladite tension de courant continu en utilisant une unité de conditionnement de puissance (152).

37. Méthode selon l'une quelconque des revendications 28 à 36, comprenant en outre le stockage de la dernière valeur mesurée de la puissance de sortie.

38. Système de commande programmable programmé de manière appropriée pour réaliser la méthode selon l'une quelconque des revendications 28 à 37, le système comprenant un processeur, une mémoire, une interface couplée à l'unité de conversion électromécanique et une interface utilisateur.

39. Système de commande selon la revendication 38, comprenant un dispositif de conversion de fréquence pour modifier une fréquence d'une tension de courant alternatif.
